# EUROPEAN PATENT APPLICATION

(11) **EP 4 794 110 A1**
(43) Date of publication of application: **19.08.2026**
(21) Application number: 24884044.9
(22) Date of filing: 19.07.2024
(51) Int. Cl.: H01M 50/593

(54) **BATTERY, BATTERY PACK AND ENERGY STORAGE SYSTEM**

(30) Priority: 03.11.2023 CN 202322985676 U; 24.02.2024 CN 202420346249 U
(71) Applicant: Huawei Digital Power Technologies Co., Ltd., Shenzhen, Guangdong 518043 (CN)
(72) Inventor: MAI, Tonghui, Shenzhen, Guangdong 518043 (CN); LI, Linfeng, Shenzhen, Guangdong 518043 (CN); YU, Shenjun, Shenzhen, Guangdong 518043 (CN); YUAN, Wei, Shenzhen, Guangdong 518043 (CN); XU, Tingting, Shenzhen, Guangdong 518043 (CN)
(74) Representative: Gill Jennings & Every LLP
(86) International application number: PCT/CN2024/106447
(87) International publication number: WO 2025/092036

(57) **Abstract**

This application provides a battery, a battery pack, and an energy storage system. The battery includes a housing, an electrode assembly, a Mylar film, an insulating porous film, and a bottom tray. The electrode assembly, the Mylar film, the insulating porous film, and the bottom tray are all accommodated in the housing. A bottom surface of the electrode assembly, the Mylar film, the insulating porous film, and the bottom tray are sequentially stacked, and the insulating porous film on the bottom surface includes a plurality of through holes. The through hole of the insulating porous film can reduce flow of dust that falls off from the electrode assembly between the electrode assembly and the housing, and reduce a possibility that a micro short circuit is formed between the bottom surface of the electrode assembly and the housing.

## Description

This application claims priority to Chinese Patent Application No. 202322985676.8, filed with the China National Intellectual Property Administration on November 3, 2023 and entitled "BATTERY, BATTERY PACK, AND ENERGY STORAGE SYSTEM", and to Chinese Patent Application No. 202420346249.7, filed with the China National Intellectual Property Administration on February 24, 2024 and entitled "BATTERY, BATTERY PACK, AND ENERGY STORAGE SYSTEM", which are incorporated herein by reference in their entireties.

### TECHNICAL FIELD

This application relates to the field of battery technologies, and in particular, to a battery, a battery pack, and an energy storage system.

### BACKGROUND

With rapid development of the new energy industry, the battery energy storage technology has become a key support technology for the new energy industry. However, when a battery is used, an energized design of a housing of the battery may cause an insulation failure between the housing and a battery cell. Consequently, there are safety risks such as cathode carbonization, breakdown and short circuit of an aluminum housing, corrosion, and liquid leakage, and safety and reliability of the battery are reduced.

### SUMMARY

Embodiments of this application provide a battery, a battery pack, and an energy storage system that can help improve safety and reliability.

According to a first aspect, an embodiment of this application provides a battery. The battery includes a housing, an electrode assembly, a Mylar film, an insulating porous film, and a bottom tray. The electrode assembly, the Mylar film, the insulating porous film, and the bottom tray are all accommodated in the housing. A bottom surface of the electrode assembly, the Mylar film, the insulating porous film, and the bottom tray are sequentially stacked, and the insulating porous film on the bottom surface includes a plurality of through holes.

The electrode assembly includes an electrode sheet, and the electrode sheet includes a granular material and a bonding agent. However, particles on the electrode sheet are prone to fall off to form dust and enter an electrolyte. In this case, a micro short circuit may be formed between the electrode assembly and the housing, which is prone to cause safety risks such as corrosion of the housing, cathode carbonization, breakdown and short circuit of the aluminum housing, and liquid leakage.

According to the battery provided in this application, the through hole of the insulating porous film can reduce flow, between the Mylar film and the bottom tray, of dust that falls off from the electrode sheet, and reduce a possibility that a micro short circuit is formed between the bottom surface of the electrode assembly and the housing. In this way, a possibility of corrosion of the housing, cathode carbonization, breakdown and short circuit of the aluminum housing, or liquid leakage is reduced, and safety and reliability of the battery are improved.

According to the first aspect, in a possible implementation, the Mylar film located on the bottom surface includes a plurality of first holes, the bottom tray includes a second hole, an aperture of the through hole is less than an aperture of the first hole, and the aperture of the through hole is less than an aperture of the second hole.

In this possible implementation, the aperture of the through hole is set to be less than the aperture of the first hole and to be less than the aperture of the second hole, to further reduce dust circulation between the bottom surface of the housing and the housing.

According to the first aspect, in a possible implementation, the plurality of first holes and a plurality of second holes are disposed in a non-overlapping manner.

In this possible implementation, a position of the first hole and a position of the second hole are staggered from each other, to avoid that the first hole and the second hole are arranged along a same straight line, and prolong a diffusion path of dust from the bottom surface of the electrode assembly to the housing, so as to reduce a possibility of forming a micro short circuit between the bottom surface and the housing.

According to the first aspect, in a possible implementation, an aperture range of the through hole is [0.01 µm, 50 µm].

In this possible implementation, the through hole does not allow dust with a particle diameter greater than 50 µm to pass through. This greatly reduces a flow amount of dust between the bottom surface and the housing, and greatly reduces a possibility of forming a micro short circuit between the electrode assembly and the housing.

According to the first aspect, in a possible implementation, the insulating porous film covers a joint between a side surface and the bottom surface.

In this possible implementation, because the Mylar film and the insulating porous film are wrapped at the joint, the insulating porous film provides enhanced protection at the joint, to reduce a possibility that the Mylar film is damaged at the joint. This helps reduce a possibility of forming a micro short circuit between the electrode assembly and the housing.

According to the first aspect, in a possible implementation, the electrode assembly further includes a top surface and a tab. The top surface and the bottom surface are disposed opposite to each other, the side surface is connected between the bottom surface and the top surface, and the tab is disposed on the top surface and protrudes from the top surface. The Mylar film covers the side surface and the top surface, and the insulating porous film covers a surface that is of the Mylar film and that is away from the side surface and the top surface. The insulating porous film on the top surface is provided with an avoidance hole, and the tab passes through the avoidance hole.

In this possible implementation, the insulating porous film covers a side that is of the Mylar film and that is away from the side surface and the top surface. This increases an area of the electrode assembly covered by the insulating porous film, reduces a flow amount of dust between the side surface of the electrode assembly, the top surface of the electrode assembly, and the housing, and further reduces a possibility of forming a micro short circuit between the electrode assembly and the housing.

According to the first aspect, in a possible implementation, the electrode assembly further includes two adjacent side surfaces, the two side surfaces and the bottom surface jointly form a bottom corner structure, and the Mylar film wraps the bottom corner structure. The battery further includes a protective adhesive tape. The protective adhesive tape warps the bottom corner structure and is located on a side that is of the Mylar film and that is away from the electrode assembly. A part of the protective adhesive tape is located between the bottom tray and the insulating porous film.

According to the first aspect, in a possible implementation, the battery further includes a battery cover. The battery cover covers the housing, the electrode assembly further includes a top surface, the top surface is disposed opposite to the bottom surface, and an insulation protective film is disposed on a side that is of the battery cover and that faces the top surface of the electrode assembly.

The Mylar film at the bottom corner structure of the electrode assembly is prone to damage due to large stress caused by bending. As a result, dust of the electrode assembly may leak from a damaged part of the Mylar film at the bottom corner structure.

In this possible implementation, the protective tape wraps the bottom corner structure. In this way, strength of the Mylar film at the bottom corner structure is enhanced, and a possibility that the Mylar film at the bottom corner structure is damaged is reduced. This reduces a flow amount of dust between the bottom corner structure of the electrode assembly and the housing, and further reduces a possibility of forming a micro short circuit between the electrode assembly and the housing.

According to the first aspect, in a possible implementation, the battery further includes a battery cover. The battery cover covers the housing, and the battery cover, the electrode assembly, the insulating porous film, and the bottom tray are sequentially disposed. The battery cover includes a cover, an upper insulating plastic part, a lower insulating plastic part, and a terminal. The cover includes a first surface and a second surface that are disposed opposite to each other, the second surface is disposed on a side that is of the cover and that faces the bottom surface, and the cover is provided with a first terminal through hole that passes through the first surface and the second surface. At least a part of the upper insulating plastic part covers the first surface, and the upper insulating plastic part is provided with a second terminal through hole. The lower insulating plastic part is located between the second surface and the electrode assembly, the lower insulating plastic part covers at least a part of the second surface, and the lower insulating plastic part is provided with a third terminal through hole. The terminal passes through the third terminal through hole, the first terminal through hole, and the second terminal through hole, and the terminal is electrically connected to the electrode assembly.

According to the first aspect, in a possible implementation, the first surface includes at least one surface pore, and a part of the upper insulating plastic part is embedded in the surface pore of the first surface; and/or the second surface includes at least one surface pore, and a part of the lower insulating plastic part is embedded in the surface pore of the second surface.

In this possible implementation, the part of the upper insulating plastic part is embedded in the surface pore of the first surface, so that the upper insulating plastic part and the cover form an integrated structure. This improves sealing performance of the battery cover, simplifies a structure of the battery cover, and facilitates assembly of the battery cover and another element.

The part of the lower insulating plastic part is embedded in the surface pore of the second surface, so that the lower insulating plastic part and the cover form an integrated structure. This improves sealing performance of the battery cover, simplifies a structure of the battery cover, and facilitates assembly of the battery cover and another element.

According to the first aspect, in a possible implementation, there is a spacing between the surface pore and an outer peripheral edge of the first terminal through hole, and there is a spacing between the surface pore and an outer peripheral edge of the cover.

In this possible implementation, there is the spacing between the surface pore and the peripheral edge of the first terminal through hole, to reduce a possibility that a hole wall of the first terminal through hole cracks and the cover cracks. There is the spacing between the surface pore and the outer peripheral edge of the cover, to reduce a possibility that the outer peripheral edge of the cover cracks and the cover cracks.

According to the first aspect, in a possible implementation, a diameter range of the surface pore is [10 nm, 500 nm].

In this possible implementation, the surface pore is a nanoscale pore, so that a contact area between the cover and the upper insulating plastic part or a contact area between the cover and the lower insulating plastic part can be increased, and connection strength between the cover and the upper insulating plastic part or connection strength between the cover and the lower insulating plastic part can be improved.

According to the first aspect, in a possible implementation, the battery cover further includes a sealing element, and the sealing element is located between an inner wall of the first terminal through hole and an outer wall of the terminal.

In this possible implementation, the sealing element is configured to implement a sealed connection between the terminal, the lower insulating plastic part, and the cover, to limit water vapor, impurities, and the like from entering the battery.

According to the first aspect, in a possible implementation, an aperture of the third terminal through hole is greater than an aperture of the second terminal through hole. The sealing element includes a first sealing part and a second sealing part that are connected, and an outer diameter of the first sealing part is less than an outer diameter of the second sealing part. At least a part of the first sealing part is located between the inner wall of the first terminal through hole and the outer wall of the terminal, and the second sealing part is located between an inner wall of the third terminal through hole and the outer wall of the terminal.

In this possible implementation, the upper insulating plastic part, the lower insulating plastic part, and the sealing element form a step structure, to avoid an electron conduction risk caused by crystallization of the electrolyte due to a gap between the upper insulating plastic part, the lower insulating plastic part, and the sealing element.

According to the first aspect, in a possible implementation, the upper insulating plastic part further includes a body and an extension part protruding from a side that is of the body and that faces the cover. The second terminal through hole penetrates the body, the body covers at least a part of the first surface, and the extension part is located between the inner wall of the first terminal through hole and the outer wall of the terminal.

In this possible implementation, the extension part extends into the first terminal through hole, and the extension part is located between the inner wall of the first terminal through hole and the outer wall of the terminal, to reduce a possibility of generating a gap between the upper insulating plastic part and the cover, and improve sealing performance of the battery cover.

According to the first aspect, in a possible implementation, a part of the first sealing part is located between the inner wall of the first terminal through hole and the outer wall of the terminal, and the first sealing part passes through the second terminal through hole. The extension part is located between an inner wall of the second terminal through hole and an outer wall of the first sealing part, or an end face that is of the extension part and that is away from the body is attached to an end that is of the first sealing part and that is away from the second sealing part.

In this possible implementation, the extension part is located between the inner wall of the second terminal through hole and the outer wall of the first sealing part, or the end face that is of the extension part and that is away from the body is attached to the end that is of the first sealing part and that is away from the second sealing part. This reduces a possibility that a gap is generated between the upper insulating plastic part, the sealing element, and the cover, and further improves sealing performance of the battery cover.

According to the first aspect, in a possible implementation, the sealing element further includes a first recessed part recessed on a surface that is of the second sealing part and that faces the cover, and a part of the cover is fastened in the first recessed part.

In this possible implementation, the part of the cover is fastened in the first recessed part. This increases a connection area between the cover and the second sealing part, reduces a possibility of generating a gap between the cover and the second sealing part, and improves sealing performance and connection strength between the cover and the second sealing part.

According to the first aspect, in a possible implementation, the sealing element further includes a second recessed part. The second recessed part is recessed on a peripheral wall that is of the second sealing part and that faces the inner wall of the third terminal through hole, the inner wall of the third terminal through hole faces the terminal to form a flange, and the flange is fastened in the second recessed part.

In this possible implementation, the flange is fixedly accommodated in the second recessed part. This increases a connection area between the lower insulating plastic part and the second sealing part, reduces a possibility of generating a gap between the lower insulating plastic part and the second sealing part, and improves sealing performance and connection strength between the lower insulating plastic part and the second sealing part.

According to the first aspect, in a possible implementation, a third recessed part is recessed on an end surface that is of the first sealing part and that is away from the second sealing part, an embedded part protrudes from a surface that is of the upper insulating plastic part and that faces the cover, and the embedded part is fixedly accommodated in the third recessed part.

In this possible implementation, the embedded part protrudes from the surface that is of the upper insulating plastic part and that faces the cover, and at least a part of the embedded part is fixedly accommodated in the third recessed part. This increases a connection area between the upper insulating plastic part and the first sealing part, reduces a possibility of generating a gap between the upper insulating plastic part and the first sealing part, and improves sealing performance and connection strength between the upper insulating plastic part and the first sealing part.

According to the first aspect, in a possible implementation, an insulation coating is disposed on an inner wall that is of the housing and that faces the electrode assembly.

In this possible implementation, the insulation coating is disposed on the inner wall of the housing, and the insulation coating is configured to form insulation protection on the inner wall of the housing, to reduce a possibility that a micro short circuit is formed between the housing and the electrode assembly when dust in the electrode assembly falls to the housing, so as to reduce a possibility of corrosion of the housing, cathode carbonization, breakdown and short circuit of the aluminum housing, or liquid leakage, and improve safety and reliability of the battery.

According to the first aspect, in a possible implementation, the inner wall includes a bottom wall, and the bottom tray is located between the insulating porous film and the bottom wall.

In this possible implementation, when the battery is in a vertical placement scenario, an end at which the bottom wall is located is connected to a support surface configured to support the battery. Dust easily falls toward the bottom wall due to gravity. Because the insulation coating is coated on the bottom wall, the dust is insulated and isolated from the bottom wall through the insulation coating, to reduce a possibility that a micro short circuit is formed between the bottom wall and the electrode assembly through the dust.

According to the first aspect, in a possible implementation, the inner wall includes a bottom wall and four side walls connected to the bottom wall. The bottom tray is located between the insulating porous film and the bottom wall, and the insulation coating is coated on two opposite side walls.

In this possible implementation, in a side placement scenario of the battery, a side part on which a side wall that is of the housing and that is coated with the insulation coating is located is configured to be connected to the support surface that supports the battery. Dust easily falls toward the side wall coated with the insulation coating due to gravity. Because the side wall is coated with the insulation coating, the dust is insulated and isolated from the side wall through the insulation coating, to reduce a possibility that a micro short circuit is formed between the side wall and the electrode assembly through the dust.

According to a second aspect, this application further provides a battery, including a housing and an electrode assembly accommodated in the housing. An inner wall that is of the housing and that faces the electrode assembly is coated with an insulation coating.

The electrode assembly includes an electrode sheet, and the electrode sheet includes a granular material and a bonding agent. However, particles on the electrode sheet are prone to fall off to form dust and enter an electrolyte. In this case, a micro short circuit may be formed between the electrode assembly and the housing, which is prone to cause safety risks such as corrosion of the housing, cathode carbonization, breakdown and short circuit of the aluminum housing, and liquid leakage.

In the battery provided in the second aspect, the insulation coating is disposed on the inner wall of the housing, and the insulation coating is configured to form insulation protection on the inner wall of the housing, to reduce a possibility that a micro short circuit is formed between the housing and the electrode assembly when dust that falls off from the electrode assembly falls to the housing, so as to reduce a possibility of corrosion of the housing, cathode carbonization, breakdown and short circuit of the aluminum housing, or liquid leakage, and improve safety and reliability of the battery.

According to the second aspect, in a possible implementation, the inner wall includes a bottom wall, and a bottom tray is located between an insulating porous film and the bottom wall.

In this possible implementation, when the battery is in a vertical placement scenario, the bottom wall is connected to a support surface configured to support the battery. Dust easily falls toward the bottom wall due to gravity. Because the insulation coating is coated on the bottom wall, the dust is insulated and isolated from the bottom wall through the insulation coating, to reduce a possibility that a micro short circuit is formed between the bottom wall and the electrode assembly through the dust.

According to the second aspect, in a possible implementation, the inner wall includes a bottom wall and four side walls connected to the bottom wall. The bottom tray is located between the insulating porous film and the bottom wall, and the insulation coating is coated on two opposite side walls.

In this possible implementation, when the battery is in a side placement scenario, the side wall coated with the insulation coating is configured to be connected to the support surface that supports the battery. Dust easily falls toward the side wall coated with the insulation coating due to gravity. Because the side wall is coated with the insulation coating, the dust is insulated and isolated from the side wall through the insulation coating, to reduce a possibility that a micro short circuit is formed between the side wall and the electrode assembly through the dust.

According to the second aspect, the battery further includes a Mylar film, an insulating porous film, and a bottom tray. The Mylar film, the insulating porous film, and the bottom tray are all accommodated in the housing. A bottom surface of the electrode assembly, the Mylar film, the insulating porous film, and the bottom tray are sequentially stacked, and the insulating porous film on the bottom surface includes a plurality of through holes.

Both a positive electrode sheet and a negative electrode sheet are made of a granular material and a bonding agent. However, particles on the positive electrode sheet and the negative electrode sheet are prone to fall off to form dust and enter the electrolyte. In this case, a micro short circuit may be formed between the electrode assembly and the housing, which is prone to cause safety risks such as corrosion of the housing, cathode carbonization, breakdown and short circuit of the aluminum housing, and liquid leakage.

According to the battery provided in the second aspect of this application, the through hole of the insulating porous film can reduce flow of dust between the Mylar film and the bottom tray, and reduce a possibility of forming a micro short circuit between the bottom surface of the electrode assembly and the housing. In this way, a possibility of corrosion of the housing, cathode carbonization, breakdown and short circuit of the aluminum housing, or liquid leakage is reduced, and safety and reliability of the battery are improved.

According to a third aspect, an embodiment of this application provides a battery. The battery includes a housing, an electrode assembly, and a battery cover. The electrode assembly is accommodated in the housing, and the battery cover covers the housing. The battery cover includes a cover, an upper insulating plastic part, a lower insulating plastic part, and a terminal. The cover includes a first surface and a second surface that are disposed opposite to each other, the second surface is disposed on a side that is of the cover and that faces the bottom surface, the cover is provided with a first terminal through hole that passes through the first surface and the second surface, the upper insulating plastic part covers the first surface, and the upper insulating plastic part is provided with a second terminal through hole. The lower insulating plastic part is located between the second surface and the electrode assembly, the lower insulating plastic part covers the second surface, and the lower insulating plastic part is provided with a third terminal through hole. The terminal passes through the third terminal through hole, the first terminal through hole, and the first terminal through hole. At least one surface pore is formed on the first surface, and a part of the upper insulating plastic part is embedded in the surface pore of the first surface; and/or at least one surface pore is formed on the second surface, and a part of the lower insulating plastic part is embedded in the surface pore of the second surface.

In the battery provided in the third aspect, the part of the upper insulating plastic part is embedded in the surface pore of the first surface, so that the upper insulating plastic part and the cover form an integrated structure. This improves sealing performance of the battery cover, simplifies a structure of the battery cover, and facilitates assembly of the battery cover and another element.

The part of the lower insulating plastic part is embedded in the surface pore of the second surface, so that the lower insulating plastic part and the cover form an integrated structure. This improves sealing performance of the battery cover, simplifies a structure of the battery cover, and facilitates assembly of the battery cover and another element.

According to the third aspect, in a possible implementation, there is a spacing between the surface pore and a peripheral edge of the first terminal through hole, and there is a spacing between the surface pore and an outer peripheral edge of the cover.

In this possible implementation, there is the spacing between the surface pore and the peripheral edge of the first terminal through hole, to reduce a possibility that a hole wall of the first terminal through hole cracks and the cover cracks. There is the spacing between the surface pore and the outer peripheral edge of the cover, to reduce a possibility that the outer peripheral edge of the cover cracks and the cover cracks.

According to the third aspect, in a possible implementation, the surface pore is a nanoscale pore, and a diameter range of the nanoscale pore is [10 nm, 500 nm].

In this possible implementation, the surface pore is a nanoscale pore, so that a contact area between the cover and the upper insulating plastic part or a contact area between the cover and the lower insulating plastic part can be increased, and connection strength between the cover and the upper insulating plastic part or connection strength between the cover and the lower insulating plastic part can be improved.

According to a fourth aspect, an embodiment of this application provides a battery. The battery includes a housing, an electrode assembly, and a battery cover. The electrode assembly is accommodated in the housing, and the battery cover covers the housing. The battery cover includes a cover, an upper insulating plastic part, a lower insulating plastic part, a terminal, and a sealing element. The cover includes a first surface and a second surface that are disposed opposite to each other, the second surface is disposed on a side that is of the cover and that faces the bottom surface, the cover is provided with a first terminal through hole that passes through the first surface and the second surface, the upper insulating plastic part covers the first surface, and the upper insulating plastic part is provided with a second terminal through hole. The lower insulating plastic part is located between the second surface and the electrode assembly, the lower insulating plastic part covers the second surface, and the lower insulating plastic part is provided with a third terminal through hole. The terminal passes through the third terminal through hole, the first terminal through hole, and the first terminal through hole. The sealing element is located between an inner wall of the first terminal through hole and an outer wall of the terminal. The sealing element, the upper insulating plastic part, the cover, and the lower insulating plastic part are of an integrated structure.

The sealing element, the upper insulating plastic part, the cover, and the lower insulating plastic part are of an integrated structure, so that a sealing connection between the sealing element, the terminal, the lower insulating plastic part, and the cover is improved, to limit water vapor, impurities, and the like from entering the battery.

According to the fourth aspect, in a possible implementation, an aperture of the third terminal through hole is greater than an aperture of the second terminal through hole. The sealing element includes a first sealing part and a second sealing part that are connected, and an outer diameter of the first sealing part is less than an outer diameter of the second sealing part. The first sealing part is located between the inner wall of the first terminal through hole and the outer wall of the terminal, and the second sealing part is located between an inner wall of the third terminal through hole and the outer wall of the terminal.

In this possible implementation, the upper insulating plastic part, the lower insulating plastic part, and the sealing element form a step structure, to reduce an electron conduction risk caused by crystallization of the electrolyte due to a gap between the upper insulating plastic part, the lower insulating plastic part, and the sealing element.

According to the fourth aspect, in a possible implementation, the upper insulating plastic part further includes a body and an extension part protruding from a side that is of the body and that faces the cover. The second terminal through hole penetrates the body, the body covers at least a part of the first surface, and the extension part is located between the inner wall of the first terminal through hole and the outer wall of the terminal.

In this possible implementation, the extension part extends into the first terminal through hole, and the extension part is located between the inner wall of the first terminal through hole and the outer wall of the terminal, to reduce a possibility of generating a gap between the upper insulating plastic part and the cover, and improve sealing performance of the battery cover.

According to the fourth aspect, in a possible implementation, a part of the first sealing part is located between the inner wall of the first terminal through hole and the outer wall of the terminal, and a remaining part of the first sealing part passes through the second terminal through hole. The extension part is located between an inner wall of the second terminal through hole and an outer wall of the first sealing part, or an end that is of the extension part and that is close to the lower insulating plastic part is attached to an end that is of the first sealing part and that is away from the second sealing part.

In this possible implementation, the extension part is located between the inner wall of the second terminal through hole and the outer wall of the first sealing part, or the end that is of the extension part and that is close to the lower insulating plastic part is attached to the end that is of the first sealing part and that is away from the second sealing part. This reduces a possibility that a gap is generated between the upper insulating plastic part, the sealing element, and the cover, and further improves sealing performance of the battery cover.

According to the fourth aspect, in a possible implementation, the sealing element further includes a first recessed part recessed on a surface that is of the second sealing part and that faces the cover, and a part of the cover is fixedly embedded in the first recessed part.

In this possible implementation, the part of the cover is fastened in the first recessed part. This increases a connection area between the cover and the second sealing part, reduces a possibility of generating a gap between the cover and the second sealing part, and improves sealing performance and connection strength between the cover and the second sealing part.

According to the fourth aspect, in a possible implementation, the sealing element further includes a second recessed part. The second recessed part is recessed on a peripheral wall that is of the second sealing part and that faces the inner wall of the third terminal through hole, the inner wall of the third terminal through hole faces the terminal to form a flange, and the flange is fastened in the second recessed part.

In this possible implementation, the flange is fixedly accommodated in the second recessed part. This increases a connection area between the lower insulating plastic part and the second sealing part, reduces a possibility of generating a gap between the lower insulating plastic part and the second sealing part, and improves sealing performance and connection strength between the lower insulating plastic part and the second sealing part.

According to the fourth aspect, in a possible implementation, a third recessed part is recessed on an end surface that is of the first sealing part and that is away from the second sealing part, an embedded part protrudes from a surface that is of the upper insulating plastic part and that faces the cover, and the embedded part is fixedly accommodated in the third recessed part.

In this possible implementation, the embedded part protrudes from the surface that is of the upper insulating plastic part and that faces the cover, and at least a part of the embedded part is fixedly accommodated in the third recessed part. This increases a connection area between the upper insulating plastic part and the first sealing part, reduces a possibility of generating a gap between the upper insulating plastic part and the first sealing part, and improves sealing performance and connection strength between the upper insulating plastic part and the first sealing part.

According to a fifth aspect, an embodiment of this application provides a battery. The battery includes a housing, an electrode assembly, and a battery cover. The electrode assembly is accommodated in the housing, the battery cover covers the housing, and an insulation protective film is disposed on a side that is of the battery cover and that faces the electrode assembly.

According to a sixth aspect, an embodiment of this application provides a battery pack. The battery pack includes a plurality of batteries according to any one of the first aspect to the fifth aspect, and the plurality of batteries are connected in series or in parallel.

According to a seventh aspect, an embodiment of this application further provides an energy storage system. The energy storage system includes the battery pack described in the sixth aspect and a power converter. The power converter is configured to: convert an alternating current output by an external alternating current power supply into a direct current, and output the direct current to the battery pack; and/or the power converter is configured to: convert a direct current output by the battery pack into an alternating current, and output the alternating current to a load or a power grid.

According to an eighth aspect, an embodiment of this application provides a battery. The battery includes a housing, an electrode assembly, a Mylar film, and a bottom tray. The electrode assembly, the Mylar film, and the bottom tray are all accommodated in the housing. A bottom surface of the electrode assembly, the Mylar film, and the bottom tray are sequentially stacked. An insulating porous film includes a plurality of through holes, and an aperture range of the through hole is [1 nm to 100 nm]. According to the battery provided in this application, the through hole of the Mylar film can reduce flow, between the bottom tray and the housing, of dust that falls off from an electrode sheet, and reduce a possibility that a micro short circuit is formed between the bottom surface of the electrode assembly and the housing. In this way, a possibility of corrosion of the housing, cathode carbonization, breakdown and short circuit of an aluminum housing, or liquid leakage is reduced, and safety and reliability of the battery are improved.

According to the eighth aspect, in a possible implementation, the bottom tray includes a plurality of holes, and the plurality of holes and the plurality of through holes are disposed in a non-overlapping manner. Positions of the plurality of holes and positions of the plurality of through holes are staggered from each other, to avoid that the holes of the bottom tray and the through holes of the Mylar film are arranged along a same straight line, and prolong a diffusion path of dust from the bottom surface of the electrode assembly to the housing, so as to reduce a possibility that a micro short circuit is formed between the bottom surface of the electrode assembly and the housing.

### BRIEF DESCRIPTION OF DRAWINGS

FIG. 1 is a diagram of a framework structure of a photovoltaic system;
FIG. 2 is a diagram of a structure of a battery pack according to some implementations of this application;
FIG. 3 is a three-dimensional exploded view of a battery according to an embodiment of this application;
FIG. 4 is a three-dimensional view of a battery with a part of a housing removed according to an embodiment of this application;
FIG. 5 is a three-dimensional view of a housing according to an embodiment of this application;
FIG. 6 is a sectional view obtained along a line I1 shown in FIG. 5;
FIG. 7 is a diagram in which a battery is used in a vertical placement scenario;
FIG. 8 is a diagram in which a battery is used in a first side placement scenario;
FIG. 9 is a diagram in which a battery is used in a second side placement scenario;
FIG. 10 is a three-dimensional view of an electrode assembly according to an embodiment of this application;
FIG. 11 is a side view of a battery with a housing removed according to an embodiment of this application;
FIG. 12 is a plane diagram of a Mylar film according to an embodiment of this application;
FIG. 13 is a three-dimensional exploded view of a Mylar film, an insulating porous film, and a bottom tray;
FIG. 14 is a plane diagram of a bottom tray, a Mylar film, and an insulating porous film that are stacked together according to an embodiment of this application;
FIG. 15 is a diagram of three-dimensional assembly of a battery with a housing and a battery cover removed;
FIG. 16 is a plane diagram of a bottom tray, a Mylar film, and an insulating porous film that are stacked together according to an embodiment of this application;
FIG. 17 is a three-dimensional view of a partial structure of a battery according to an embodiment of this application;
FIG. 18 is a three-dimensional view of a battery cover according to an embodiment of this application;
FIG. 19 is a partial sectional view obtained along a line I2-I2 in FIG. 18 according to an embodiment of this application;
FIG. 20 is a partial sectional view obtained along a line I2-I2 in FIG. 18 according to an embodiment of this application;
FIG. 21 is a three-dimensional view of a sealing element of a battery cover shown in FIG. 20;
FIG. 22 is a sectional view obtained in a radial direction of a sealing element shown in FIG. 20;
FIG. 23 is a partial sectional view obtained along a line I2-I2 in FIG. 18 according to an embodiment of this application;
FIG. 24 is a partial sectional view obtained along a line I2-I2 in FIG. 18 according to an embodiment of this application;
FIG. 25 is a three-dimensional view of a sealing element of a battery cover shown in FIG. 24;
FIG. 26 is a partial sectional view of a cover, a lower insulating plastic part, and a sealing element that are assembled together according to an embodiment of this application;
FIG. 27 is a partial sectional view of a cover, a lower insulating plastic part, and a sealing element that are assembled together according to an embodiment of this application;
FIG. 28 is a partial sectional view of a cover, a lower insulating plastic part, and a sealing element that are assembled together according to an embodiment of this application;
FIG. 29 is a partial sectional view of a cover, an upper insulating plastic part, and a sealing element that are assembled together according to an embodiment of this application;
FIG. 30 is a partial sectional view of a cover, an upper insulating plastic part, and a sealing element that are assembled together according to an embodiment of this application;
FIG. 31 is a partial sectional view of a cover, an upper insulating plastic part, and a sealing element that are assembled together according to an embodiment of this application; and
FIG. 32 is a diagram in which an insulation protective film is disposed on a battery cover according to an embodiment of this application.

### DESCRIPTION OF EMBODIMENTS

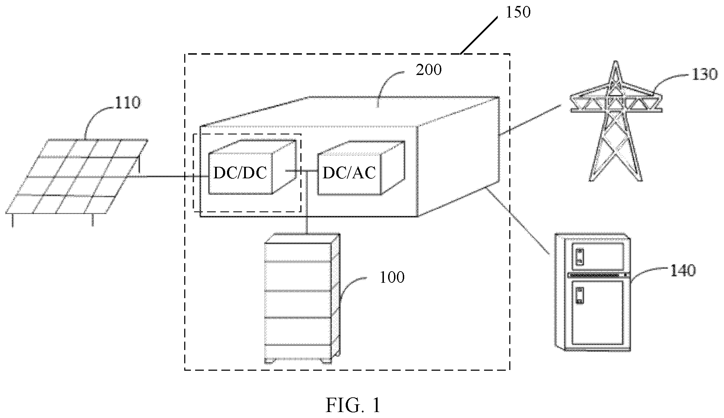

FIG. 1 is a diagram of a framework structure of a photovoltaic system. As shown in FIG. 1, the photovoltaic system includes a photovoltaic array 110, a power grid 130, an external load 140, and an energy storage system 150. The energy storage system 150 includes a battery pack 100 and a power converter 200. The power converter 200 is configured to: convert an alternating current output by an external alternating current power supply into a direct current, and output the direct current to the battery pack 100, and/or the power converter 200 is configured to: convert a direct current output by the battery pack 100 into an alternating current, and output the alternating current to the external load 140 or the power grid 130. The power converter 200 may integrate a DC/DC conversion circuit and a DC/AC conversion circuit, and the battery pack 100 may be located between the DC/DC conversion circuit and the DC/AC conversion circuit. The battery pack 100 may be charged after the DC/DC conversion circuit performs boost or buck conversion on electric energy generated by the photovoltaic array 110. When the electric energy generated by the photovoltaic array 110 is insufficient to supply power to the power grid 130/the external load 140, electric energy stored in the battery pack 100 may be transmitted to the power grid 130/the external load 140 through the DC/AC conversion circuit in the power converter 200. In addition, the energy storage system 150 may further receive power supply from the power grid 130. An alternating current output by the power grid 130 is converted into a direct current through the DC/AC conversion circuit, and the direct current is transmitted to the battery pack 100, to charge the battery pack 100. Alternatively, the power converter 200 includes only the DC/AC conversion circuit. The battery pack 100 is equipped with the DC/DC conversion circuit, and the battery pack 100 directly receives direct current electric energy generated by the photovoltaic array 110. It may be understood that the energy storage system 150 may be further used in an application scenario like a wind power system. The application scenario of the energy storage system 150 is not limited in this application.

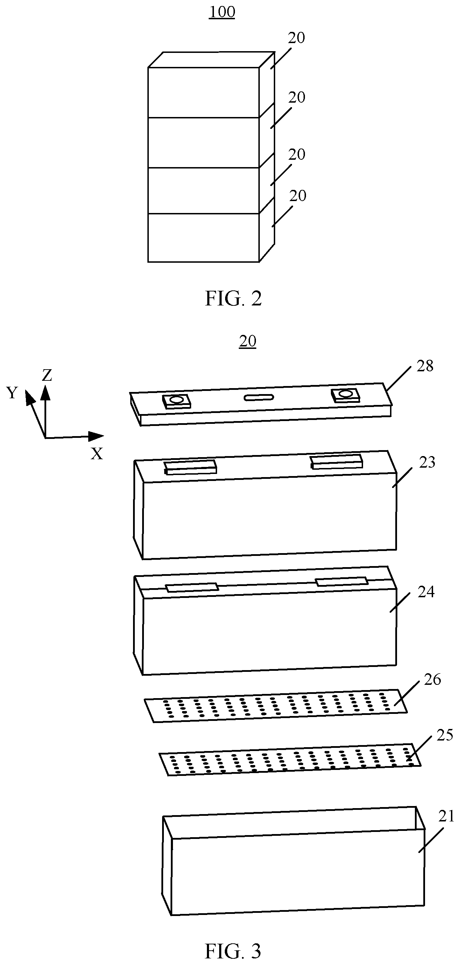

FIG. 2 is a diagram of a structure of a battery pack according to some implementations of this application.

The battery pack 100 includes a plurality of batteries 20. The plurality of batteries 20 are connected in series or in parallel. The battery 20 may be a secondary battery, for example, a lithium-ion secondary battery, a sodium-ion secondary battery, a potassium-ion secondary battery, a magnesium-ion secondary battery, a zinc-ion secondary battery, or an aluminum-ion secondary battery.

Embodiments of this application provide a battery. The battery includes a housing, an electrode assembly, a Mylar film, and a bottom tray. The electrode assembly, the Mylar film, and the bottom tray are all accommodated in the housing. A bottom surface of the electrode assembly, the Mylar film, and the bottom tray are sequentially stacked. An insulating porous film includes a plurality of through holes, and an aperture range of the through hole is [1 nm to 100 nm]. According to the battery provided in this application, the through hole of the Mylar film can reduce flow, between the bottom tray and the housing, of dust that falls off from an electrode sheet, and reduce a possibility that a micro short circuit is formed between the bottom surface of the electrode assembly and the housing. In this way, a possibility of corrosion of the housing, cathode carbonization, breakdown and short circuit of an aluminum housing, or liquid leakage is reduced, and safety and reliability of the battery are improved.

According to the eighth aspect, in a possible implementation, the bottom tray includes a plurality of holes, and the plurality of holes and the plurality of through holes are disposed in a non-overlapping manner. Positions of the plurality of holes and positions of the plurality of through holes are staggered from each other, to avoid that the holes of the bottom tray and the through holes of the Mylar film are arranged along a same straight line, and prolong a diffusion path of dust from the bottom surface of the electrode assembly to the housing, so as to reduce a possibility that a micro short circuit is formed between the bottom surface of the electrode assembly and the housing.

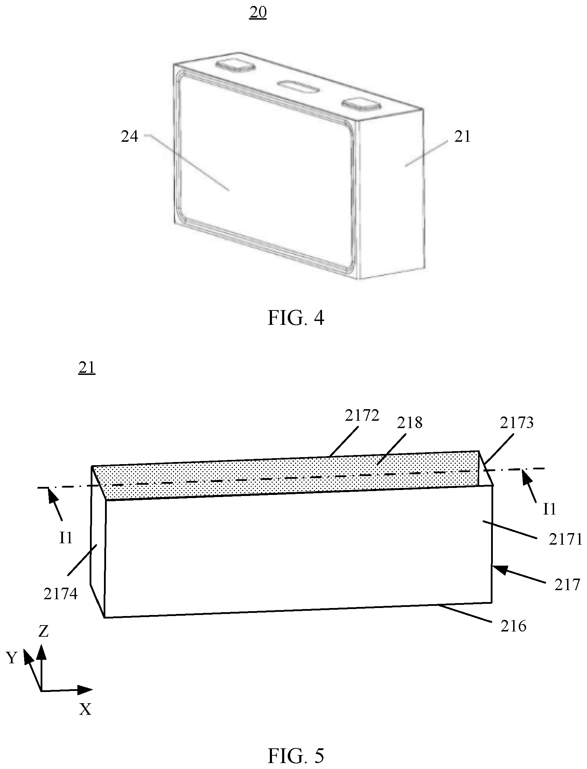

In another embodiment, the battery further includes the insulating porous film. Refer to FIG. 3 and FIG. 4. FIG. 3 is a three-dimensional exploded view of a battery according to an embodiment of this application. FIG. 4 is a three-dimensional view of a battery with a part of a housing removed according to an embodiment of this application. The battery 20 includes a housing 21, an electrode assembly 23, a Mylar film 24, a bottom tray 25, and a battery cover 28. The housing 21 is configured to accommodate an electrolyte (not shown in the figure). The electrode assembly 23, the Mylar film 24, and the bottom tray 25 are all accommodated in the housing 21. The housing 21 is an aluminum housing. It may be understood that the housing 21 may be a housing made of another conductive material. The battery cover 28 covers the housing 21 to form a closed cavity with the housing 21.

The electrode assembly 23 includes a positive electrode sheet and a negative electrode sheet. The positive electrode sheet and the negative electrode sheet can intercalate and de-intercalate metal ions (for example, lithium ions), to store and release energy. The positive electrode sheet and the negative electrode sheet are main energy storage parts of the battery 20, and may represent energy density, cycle performance, and safety performance of the battery 20. The electrolyte may be a transmission carrier of metal ions. The Mylar film 24 may wrap the electrode assembly 23. In other words, the Mylar film 24 covers the electrode assembly 23, and is configured to insulate and isolate the electrode assembly 23 from the housing 21. The electrode assembly 23, the Mylar film 24, and the bottom tray 25 are sequentially stacked in a first direction. The bottom tray 25 is configured to support and carry the electrode assembly 23, and the bottom tray 25 is configured to insulate and separate the electrode assembly 23 from the housing 21. The electrode assembly 23 is an electrode assembly that may be formed through lamination or winding. The first direction may be a Z direction shown in FIG. 3.

In some implementations of this application, FIG. 5 is a three-dimensional view of a housing according to an embodiment of this application. The housing 21 is approximately of a cube structure. The housing 21 includes a bottom wall 216 and a plurality of side walls 217 connected to the bottom wall 216. The bottom wall 216 and the bottom tray 25 are disposed opposite to each other in the first direction, and the plurality of side walls 217 include a first side wall 2171, a second side wall 2172, a third side wall 2173, and a fourth side wall 2174. An area of the first side wall 2171 may be greater than an area of the third side wall 2173. The first side wall 2171 and the second side wall 2172 are disposed opposite to each other in a second direction, and the third side wall 2173 and the fourth side wall 2174 are disposed opposite to each other in a third direction. The first direction and the second direction are perpendicular to each other, the second direction and the third direction are perpendicular to each other, and the first direction and the third direction are perpendicular to each other. The area of the first side wall 2171 may be equal to an area of the second side wall 2172. The area of the third side wall 2173 may be equal to an area of the fourth side wall 2174. It may be understood that areas of the four side walls 217 may be equal or may be different from each other. It may be understood that the housing 21 is not limited to a cube structure in this application, and the housing 21 may be in a regular shape or an irregular shape like a disc shape or a spherical shape. When the housing 21 is circular, there may be one side wall 217.

Both the positive electrode sheet and the negative electrode sheet are made of a granular material and a bonding agent. However, particles on the positive electrode sheet and the negative electrode sheet are prone to fall off to form dust and enter the electrolyte. In this case, a micro short circuit may be formed between the electrode assembly and the housing, which is prone to cause safety risks such as corrosion of the housing, cathode carbonization, breakdown and short circuit of the aluminum housing, and liquid leakage.

In view of this, as shown in FIG. 5, the battery 20 provided in this application may further include an insulation coating 218 coated on an inner wall of the housing 21. The insulation coating 218 is configured to form insulation protection on the inner wall of the housing 21, to reduce a possibility that a micro short circuit is formed between the housing 21 and the electrode assembly 23 when dust in the electrode assembly 23 falls to the housing 21. In this way, a possibility of corrosion of the housing, cathode carbonization, breakdown and short circuit of the aluminum housing, or liquid leakage is reduced, and safety and reliability of the battery 20 is improved. FIG. 5 shows an example in which the insulation coating 218 is coated on a surface that is of the second side wall 2172 and that faces an inner cavity of the housing 21. A shaded part in FIG. 5 is the insulation coating 218. If a thickness of the insulation coating 218 is excessively thin, insulation performance of the insulation coating 218 may be poor. If the thickness of the insulation coating 218 is excessively thick, energy density of the battery is affected. Therefore, a thickness range of the insulation coating 218 is [30 µm, 200 µm], to be specific, the thickness of the insulation coating 218 is not less than 30 µm and is not greater than 200 µm. For example, the thickness of the insulation coating 218 may be 30 µm, 35 µm, 40 µm, 50 µm, 55 µm, 60 µm, 65 µm, 70 µm, 75 µm, 80 µm, 85 µm, 90 µm, 95 µm, 100 µm, 150 µm, 200 µm, to have good insulation performance.

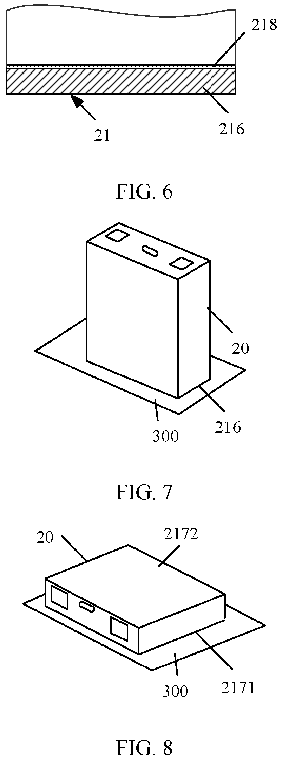

In some implementations of this application, FIG. 6 is a sectional view obtained along a line I1 shown in FIG. 5. The insulation coating 218 is coated on a side that is of the bottom wall 216 and that faces the inner cavity of the housing 21.

FIG. 7 is a diagram in which the battery is used in a vertical placement scenario. When the battery 20 is used in the vertical placement scenario, one end of the housing 21 in which the bottom wall 216 is located is attached to or in contact with a support surface 300 configured to support the battery 20. The support surface 300 may be a ground or the like. In the vertical placement scenario of the battery 20, dust easily falls toward the bottom wall 216 due to gravity. Because the insulation coating 218 is coated on the bottom wall 216, dust is insulated and isolated from a surface that is of the bottom wall 216 and that faces the inner cavity of the housing 21 through the insulation coating 218, so that a possibility that a micro short circuit is formed between the bottom wall 216 and the electrode assembly 23 through dust is reduced.

In some implementations of this application, the insulation coating 218 may be coated on a surface that is of the first side wall 2171 and that faces the inner cavity of the housing 21 and a surface that is of the second side wall 2172 and that faces the inner cavity of the housing 21. FIG. 8 is a diagram in which the battery is used in the first side placement scenario. When the battery 20 is used in a first side placement scenario, as shown in FIG. 8, the first side wall 2171 is in contact with the support surface 300 configured to support the battery 20. It may be understood that one of the first side wall 2171 and the second side wall 2172 is attached to or in contact with the support surface 300 configured to support the battery 20. In the first side placement scenario of the battery 20, dust easily falls toward the first side wall 2171 or the second side wall 2172 due to gravity. Because the insulation coating 218 is coated on the surface that is of the first side wall 2171 and that faces the inner cavity of the housing 21 and the surface that is of the second side wall 2172 and that faces the inner cavity of the housing 21, dust is insulated and isolated from the first side wall 2171 and the second side wall 2172 through the insulation coating 218, to reduce a possibility that a micro short circuit is formed between the electrode assembly 23 and each of the first side wall 2171 and the second side wall 2172 through the dust. The insulation coating 218 is coated on both the first side wall 2171 and the second side wall 2172 that face the inner wall of the housing 21. Therefore, when the battery 20 is side-disposed, either the first side wall 2171 or the second side wall 2172 can be in contact with the support surface that supports the battery 20. This facilitates use of the battery 20.

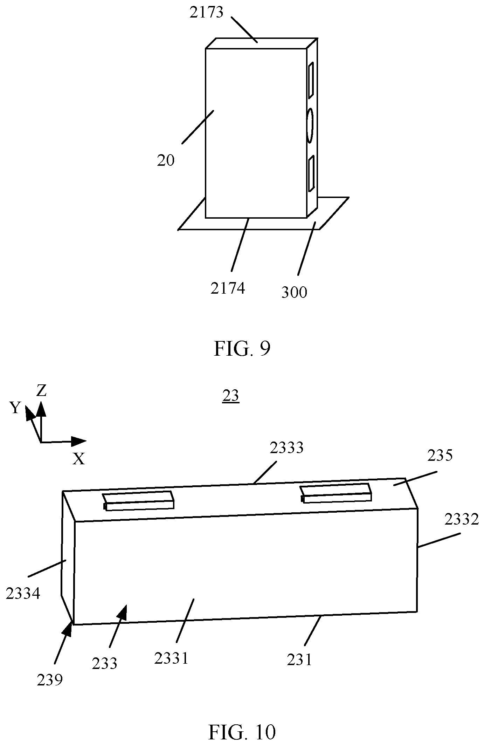

In some implementations of this application, the insulation coating 218 is coated on a surface that is of the third side wall 2173 and that faces the inner cavity of the housing 21 and a surface that is of the fourth side wall 2174 and that faces the inner cavity of the housing 21. FIG. 9 is a diagram in which the battery is used in the second side placement scenario. When the battery 20 is used in a second side placement scenario, the fourth side wall 2174 is in contact with the support surface 300 configured to support the battery 20. It may be understood that one of the third side wall 2173 and the fourth side wall 2174 is in contact with the support surface 300 configured to support the battery 20. In the second side placement scenario of the battery 20, dust easily falls toward the third side wall 2173 or the fourth side wall 2174 due to gravity. Because the insulation coating 218 is coated on the third side wall 2173 and the fourth side wall 2174, dust is insulated and isolated from the third side wall 2173 or the fourth side wall 2174 through the insulation coating 218, to reduce a possibility that a micro short circuit is formed between the electrode assembly 23 and each of the third side wall 2173 and the fourth side wall 2174 through the dust. The insulation coating 218 is coated on both the third side wall 2173 and the fourth side wall 2174. Therefore, when the battery 20 is side-disposed, a side on which either the third side wall 2173 or the fourth side wall 2174 is located can be in contact with the support surface that supports the battery 20. This facilitates use of the battery 20. It may be understood that the thickness of the insulation coating 218 is not limited in this application. It may be understood that a position of the insulation coating 218 on the inner wall of the housing 21 is not limited. For example, the insulation coating 218 may be coated on an entire region or a partial region of the inner wall of the housing 21.

It may be understood that the inner wall of the housing 21 includes a bottom wall, the bottom tray 25 is located between the electrode assembly 23 and the bottom wall of the inner wall, and the bottom wall of the inner wall is a surface that is of the bottom wall 216 and that faces the inner cavity of the housing 21.

It may be understood that the inner wall of the housing 21 includes the bottom wall and four side walls connected to the bottom wall, the bottom tray 25 is located between the electrode assembly 23 and the bottom wall, the insulation coating 218 is coated on side walls of two opposite inner walls, and the side wall of the inner wall is a surface that is of the side wall 217 and that faces the inner cavity of the housing 21.

The insulation coating 218 may be formed on the inner wall of the housing 21 through electrophoretic coating or inner wall spraying. A material of the insulation coating 218 includes an organic material and/or an inorganic material. The organic material is not limited to an ultraviolet curing coating (ultraviolet curing coating, UV) spraying material, a polyethylene (Polyethylene, PE) coating material, a polypropylene (PP) aluminum-plastic film, a silicon coating, an organic resin coating material of each ratio, and the like. The inorganic material is not limited to materials such as ceramic, magnesium oxide, aluminum oxide, water glass, phosphate, and talc.

A main material in the UV spraying material/organic resin coating material may be one or more of epoxy resin, acrylic resin, polyurethane resin, hydroxy acrylic resin, and another polyfunctional resin.

An additive in the UV spraying material/organic resin coating material may be one or more of a photoinitiator, an active diluent, a flame retardant, a wetting agent, a leveling agent, an anti-foaming agent, and the like.

In some implementations of this application, forming the insulation coating 218 on the inner wall of the housing 21 of the battery 20 may include the following steps: pre-cleaning the battery 20, spraying an insulation coating material on the inner wall of the housing 21, and then curing to form the insulation coating 218 on the inner wall of the housing 21. The step of pre-cleaning the battery 20 includes: performing surface layer cleaning on the inner wall of the housing 21, which is not limited to plasma cleaning, laser cleaning, water cleaning, and the like.

When surface layer cleaning is performed on the inner wall of the housing 21 through laser cleaning, a laser cleaning depth is [5 µm, 10 µm], a laser cleaning power range is [500 W, 2000 W] (high power), and a laser cleaning speed is [5000 mm/s, 15000 mm/s], to obtain excellent cleaning effect. It may be understood that, when laser cleaning is performed on the housing 21, specific values of the laser cleaning depth, the laser cleaning power, and the laser cleaning speed are not limited in this application.

When surface layer cleaning is performed on the inner wall of the housing 21 through plasma cleaning, a power range of plasma cleaning is [200 W, 1500 W], an output frequency range of plasma cleaning is [20 kHz, 40 kHz], and a temperature of the housing 21 is heated to [40°C, 80°C] during plasma cleaning, that is, the temperature of the housing 21 is heated to be not less than 40°C and not greater than 80°C, to obtain excellent cleaning effect. It may be understood that, when plasma cleaning is performed on the housing 21, power of plasma cleaning, an output frequency of plasma cleaning, and a temperature to which the housing 21 is heated during plasma cleaning are not limited in this application. It may be understood that, when plasma cleaning is performed on the housing 21, specific values of the power of plasma cleaning, the output frequency range of plasma cleaning, and the temperature to which the housing 21 is heated during plasma cleaning are not limited in this application.

A spraying distance of the insulation coating material depends on a size of the housing of the battery. A time range of spraying the insulation coating material is [1 min, 8 min]. It may be understood that the time range of spraying the insulation coating material is not limited in this application, and only the coating material needs to be sprayed on the inner wall of the housing 21.

In some implementations of this application, FIG. 10 is a three-dimensional view of an electrode assembly according to an embodiment of this application. The electrode assembly 23 includes a bottom surface 231, a plurality of side surfaces 233, and a top surface 235. The plurality of side surfaces 233 are connected between the bottom surface 231 and the top surface 235. The bottom surface 231 and the top surface 235 are disposed opposite to each other in the first direction. The plurality of side surfaces 233 include a first side surface 2331, a second side surface 2332, a third side surface 2333, and a fourth side surface 2334. The first side surface 2331 and the second side surface 2332 are disposed opposite to each other in the second direction, and the third side surface 2333 and the fourth side surface 2334 are disposed opposite to each other in the third direction. The first side surface 2331 is connected to the bottom surface 231, the second side surface 2332 is connected to the bottom surface 231, the third side surface 2333 is connected to the bottom surface 231, and the fourth side surface 2334 is connected to the bottom surface 231. The Mylar film 24 wraps the first side surface 2331, the second side surface 2332, the third side surface 2333, and the fourth side surface 2334.

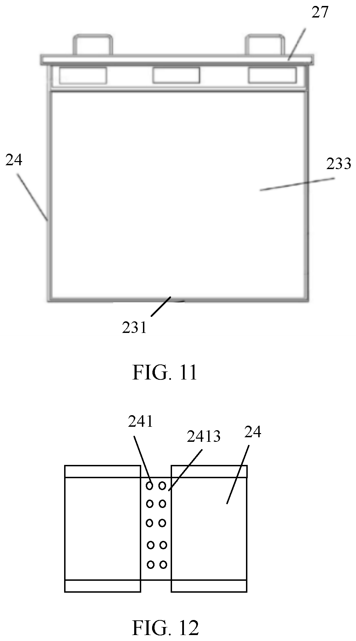

Refer to FIG. 10 and FIG. 11. FIG. 11 is a side view of a battery with a housing removed according to an embodiment of this application. The Mylar film 24 wraps the bottom surface 231, the side surfaces 233, and the top surface 235. In some implementations of this application, the Mylar film 24 wraps the first side surface 2331, the second side surface 2332, the third side surface 2333, the fourth side surface 2334, and the top surface 235. It may be understood that the Mylar film 24 may wrap at least one of the first side surface 2331, the second side surface 2332, the third side surface 2333, and the fourth side surface 2334. For example, the Mylar film 24 may wrap the first side surface 2331 and the second side surface 2332, but does not wrap the third side surface 2333 and the fourth side surface 2334.

FIG. 12 is a plane diagram of a Mylar film according to an embodiment of this application. A part that is of the Mylar film 24 and that is located on the bottom surface 231 includes a plurality of first holes 241, configured to circulate the electrolyte. A region 2413 of the Mylar film 24 is attached to the bottom surface 231.

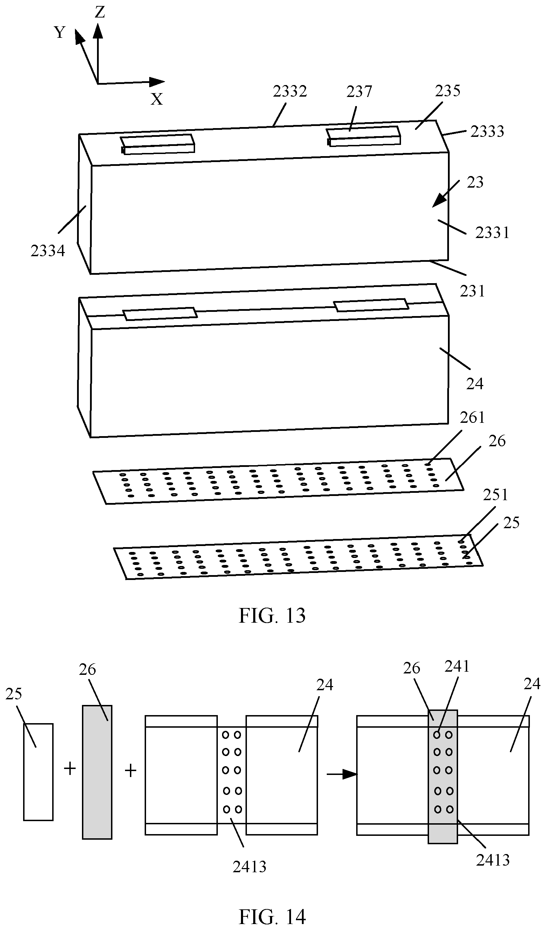

FIG. 13 is a three-dimensional exploded view of a Mylar film, an insulating porous film, and a bottom tray. The bottom tray 25 includes a second hole 251. The second hole 251 is configured to circulate the electrolyte. In some implementations of this application, a position of the first hole 241 (as shown in FIG. 12) and a position of the second hole 251 are staggered from each other, to avoid that the first hole 241 and the second hole 251 are arranged along a same straight line, and prolong a diffusion path of dust from the bottom surface 231 of the electrode assembly 23 to the housing 21, so as to reduce a possibility that a micro short circuit is formed between the bottom surface 231 and the housing 21.

The battery 20 further includes an insulating porous film 26. The insulating porous film 26 is located between the Mylar film 24 and the bottom tray 25 in the first direction. The bottom surface 231, the Mylar film 24, the insulating porous film 26, and the bottom tray 25 are sequentially stacked in the first direction. The insulating porous film 26 is configured to absorb dust. The insulating porous film 26 includes a plurality of through holes 261, an aperture of the through hole 261 is less than an aperture of the first hole 241, and the aperture of the through hole 261 is less than an aperture of the second hole 251. The through hole 261 in FIG. 13 is merely an example, and does not represent a real size of the through hole 261 during application.

The through hole 261 allows flow of the electrolyte, the aperture of the through hole 261 is less than the aperture of the first hole 241, and the aperture of the through hole 261 is less than the aperture of the second hole 251. The through hole 261 can reduce flow of dust between the Mylar film 24 and the bottom tray 25, and reduce a possibility that a micro short circuit is formed between the electrode assembly 23 and the housing 21. In this way, a possibility of corrosion of the housing 21, cathode carbonization, breakdown and short circuit of the aluminum housing, or liquid leakage is reduced, and safety and reliability of the battery 20 is improved.

In some implementations of this application, an aperture range of each of the first hole 241 and the second hole 251 is [1 mm, 5 mm], and the aperture of each of the first hole 241 and the second hole 251 is not less than 1 mm and not greater than 5 mm. For example, the aperture of the first hole 241 may be 1 mm, 2 mm, 3 mm, 4 mm, or 5 mm, and the aperture of the second hole 251 may be 1 mm, 2 mm, 3 mm, 4 mm, or 5 mm. An aperture range of the through hole 261 is [0.01 µm, 50 µm], and the aperture of the through hole 261 is not less than 0.01 µm and not greater than 50 µm. For example, the aperture of the through hole 261 may be 0.01 µm, 0.03 µm, 0.05 µm, 0.07 µm, 0.1 µm, 0.3 µm, 0.5 µm, 0.7 µm, 1 µm, 3 µm, 5 µm, 7 µm, 10 µm, 13 µm, 15 µm, 17 µm or 20 µm. For example, a particle size range of the dust is approximately [10 µm, 20 µm], the aperture of the through hole 261 may be set to [0.01 µm, 10 µm], and the through hole 261 does not allow dust with a particle size greater than 10 µm to pass through. This greatly reduces a flow amount of dust between the bottom surface 231 and the bottom wall 216, and greatly reduces a possibility that a micro short circuit is formed between the electrode assembly 23 and the housing 21.

The insulating porous film 26 may be a material like a multi-layer composite separator, an organic/inorganic composite separator, a nanofiber coated separator, an electrospun separator, or a cellulose-based separator. A thickness range of the insulating porous film 26 is [2 µm, 200 µm]. A porosity range of the insulating porous film 26 is [10%, 90%]. It may be understood that the thickness range of the insulating porous film 26 is not limited in this application, and the porosity range of the insulating porous film 26 is not limited in this application.

In some implementations of this application, the Mylar film 24, the insulating porous film 26, and the bottom tray 25 are an integrated composite structure. The Mylar film 24, the insulating porous film 26, and the bottom tray 25 may form the integrated composite structure through hot-pressing lamination. A temperature range for hot-pressing lamination of the Mylar film 24, the insulating porous film 26, and the bottom tray 25 is [100°C, 300°C]. It may be understood that, in this application, the Mylar film 24, the insulating porous film 26, and the bottom tray 25 are not limited to forming the integrated composite structure through hot-pressing lamination, and the Mylar film 24, the insulating porous film 26, and the bottom tray 25 may alternatively form the integrated composite structure through another process. It may be understood that the Mylar film 24, the insulating porous film 26, and the bottom tray 25 may alternatively not form the integrated composite structure. The Mylar film 24, the insulating porous film 26, and the bottom tray 25 may alternatively be of a split structure, or the Mylar film 24 and the insulating porous film 26 are of an integrated structure, or the insulating porous film 26 and the bottom tray 25 are of an integrated structure.

In a related technology, the Mylar film at a joint between the bottom surface and the side surface of the electrode assembly is prone to damage due to large stress caused by bending. As a result, dust on the electrode assembly reaches the housing from a damaged part of the Mylar film, and a micro short circuit is formed between the electrode assembly and the housing through the damaged part.

The Mylar film 24 is located between the insulating porous film 26 and the electrode assembly 23. A region that is of the Mylar film 24 and that covers the bottom surface 231 is the region 2413 (as shown in FIG. 12). The bottom surface 231 and the side surface 233 form a joint. In some implementations of this application, the bottom surface 231 intersects with the first side surface 2331 to form a first joint, and the bottom surface 231 intersects with the second side surface 2332 to form a second joint. The Mylar film 24 wraps the first joint and the second joint. The insulating porous film 26 extends from the bottom surface 231 to the first side surface 2331 and wraps the first joint. The insulating porous film 26 extends from the bottom surface 231 to the second side surface 2332 and wraps the second joint. Refer to FIG. 13 and FIG. 14. FIG. 14 is a plane diagram of a bottom tray, a Mylar film, and an insulating porous film that are stacked together according to an embodiment of this application. A width of the insulating porous film 26 is approximately the same as a width of the bottom surface 231 in the third direction. An extension length of the insulating porous film 26 in a length direction of the insulating porous film 26 is greater than a length of the bottom surface 231 in the second direction. The insulating porous film 26 covers the bottom surface 231, the first joint, and the second joint. Because the first joint and the second joint are wrapped with the Mylar film 24 and the insulating porous film 26, the insulating porous film 26 performs enhanced protection on the Mylar film 24 at the first joint and the second joint. This reduces a possibility that the Mylar film 24 is damaged at the first joint and the second joint, and helps reduce a possibility that a micro short circuit is formed between the electrode assembly 23 and the housing 21.

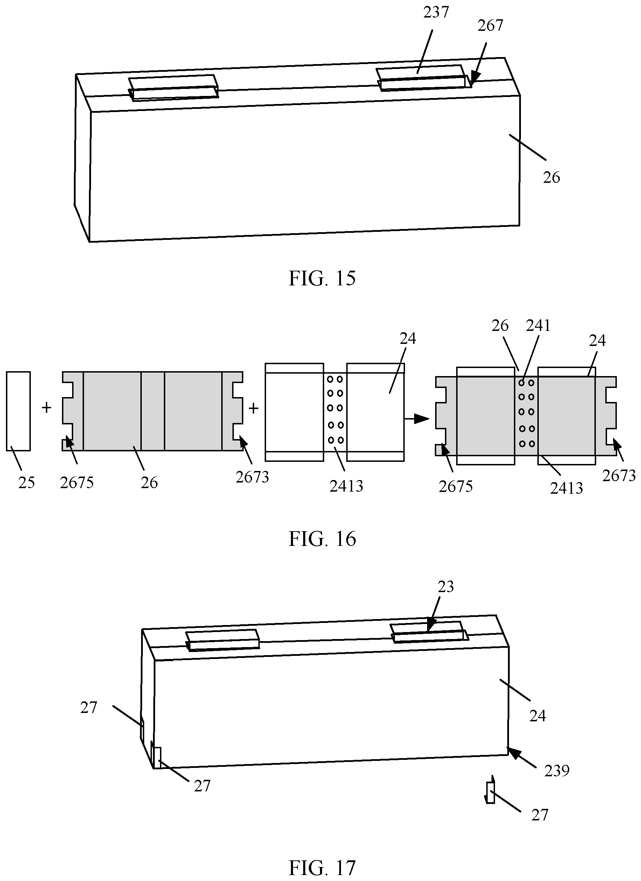

In some implementations of this application, refer to FIG. 10 and FIG. 15. FIG. 15 is a diagram of three-dimensional assembly of the battery with the housing and the battery cover removed. The insulating porous film 26 covers a side that is of the Mylar film 24 and that is away from the third side surface 2333, and the insulating porous film 26 covers the side that is of the Mylar film 24 and that is away from the third side surface 2333, to increase an area that is of the insulating porous film 26 and that covers the Mylar film 24, and increase a protection area of the insulating porous film 26 for the Mylar film 24. The top surface 235 is connected to an end that is of the third side surface 2333 and that is away from the bottom surface 231, the top surface 235 is connected to an end that is of the fourth side surface 2334 and that is away from the bottom surface 231, the top surface 235 and the bottom surface 231 are disposed opposite to each other in the first direction, and the electrode assembly 23 further includes a tab 237 that protrudes from the top surface 235. The insulating porous film 26 covers the top surface 235. In this way, an area that is of the insulating porous film 26 and that covers the electrode assembly 23 is increased, a flow amount of dust between the top surface 235 of the electrode assembly 23 and the housing 21 is reduced, and a possibility of forming a micro short circuit between the electrode assembly 23 and the housing 21 is further reduced.

The insulating porous film 26 located on the top surface 235 is provided with an avoidance hole 267 (as shown in FIG. 15), and the avoidance hole 267 is configured to allow the tab 237 to pass through. The tab 237 passes through the avoidance hole 267. The tab 237 is electrically connected to the battery cover 28, to output electric energy from the battery 20 to a power-consuming device, or input electric energy to the battery 20. The tab 237 includes a positive tab and a negative tab. The positive tab is formed by extending the positive plate. The negative tab is formed by extending the negative plate. There may be two avoidance holes 267. One avoidance hole 267 allows the positive tab to pass through, and the other avoidance hole 267 allows the negative tab to pass through. There may alternatively be one avoidance hole 267. Both the positive tab and the negative tab pass through the avoidance hole 267. Refer to FIG. 15 and FIG. 16. FIG. 16 is a plane diagram of a bottom tray, a Mylar film, and an insulating porous film that are stacked together according to an embodiment of this application. A first groove 2673 is recessed on an edge of one side of the insulating porous film 26, a second groove 2675 is recessed on an edge of one side of the insulating porous film 26, the first groove 2673 and the second groove 2675 are located on the top surface 235, and a side wall of the first groove 2673 and a side wall of the second groove 2675 jointly enclose the avoidance hole 267 (as shown in FIG. 15).

In a related technology, the Mylar film on a bottom corner structure of the electrode assembly is prone to damage due to large stress caused by bending. As a result, dust on the electrode assembly reaches the housing from a damaged part of the Mylar film on the bottom corner structure, and a micro short circuit is formed between the electrode assembly and the housing through the damaged part.

Refer to FIG. 10 and FIG. 17. FIG. 17 is a three-dimensional view of a partial structure of the battery according to an embodiment of this application. The electrode assembly 23 further includes the bottom corner structure 239 formed by using the bottom surface 231 and two adjacent side surfaces 233, and the Mylar film 24 wraps the bottom corner structure 239. The battery 20 further includes a plurality of protective adhesive tapes 27, and each protective adhesive tape 27 wraps a corresponding bottom corner structure 239 and is located on a side that is of the Mylar film 24 and that is away from the electrode assembly 23. A part of the protective adhesive tape 27 is located between the bottom tray 25 and the insulating porous film 26. The protective adhesive tape 27 wraps the bottom corner structure 239. In this way, strength of the Mylar film 24 at the bottom corner structure 239 is enhanced, and a possibility that the Mylar film 24 at the bottom corner structure 239 is damaged is reduced. This reduces a flow amount of dust between the bottom corner structure 239 of the electrode assembly 23 and the housing 21, and further reduces a possibility of forming a micro short circuit between the electrode assembly 23 and the housing 21.

For example, the bottom surface 231, the first side surface 2331, and the third side surface 2333 jointly form a bottom corner structure 239; the bottom surface 231, the first side surface 2331, and the fourth side surface 2334 jointly form a bottom corner structure 239; the bottom surface 231, the second side surface 2332, and the third side surface 2333 jointly form a bottom corner structure 239; and the bottom surface 231, the second side surface 2332, and the fourth side surface 2334 jointly form a bottom corner structure 239. It may be understood that different shapes and structures of the electrode assembly 23 indicate different quantities of bottom corner structures 239.

It may be understood that the inner wall of the housing 21 includes the bottom wall, the bottom tray 25 is located between the insulating porous film 26 and the bottom wall of the inner wall, and the bottom wall of the inner wall is the surface that is of the bottom wall 216 and that faces the inner cavity of the housing 21.

It may be understood that the inner wall of the housing 21 includes the bottom wall and the four side walls connected to the bottom wall, the bottom tray 25 is located between the insulating porous film 26 and the bottom wall of the inner wall, the insulation coating 218 may be coated on side walls of two opposite inner walls, and the side wall of the inner wall is a surface that is of the side wall 217 and that faces the inner cavity of the housing 21.

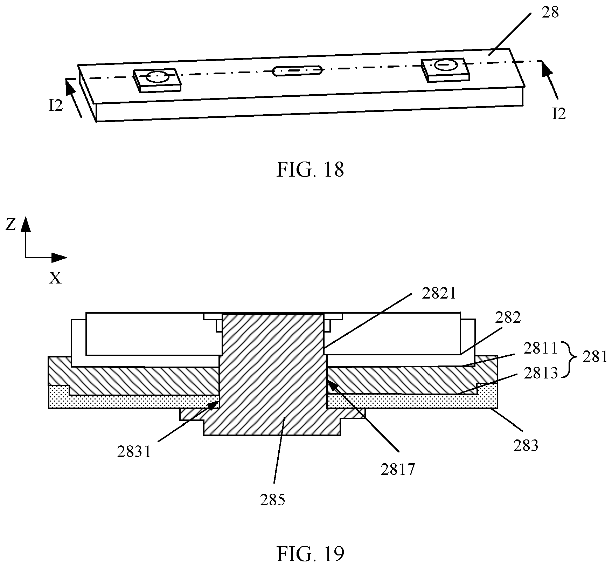

Refer to FIG. 18 and FIG. 19. FIG. 18 is a three-dimensional view of a battery cover according to an embodiment of this application. FIG. 19 is a partial sectional view obtained along a line I2-I2 in FIG. 18 according to an embodiment of this application. The battery cover 28 may be an integrated structure or a split structure. In some implementations of this application, the battery cover 28 includes a cover 281, an upper insulating plastic part 282, a lower insulating plastic part 283, and a terminal 285. The cover 281 includes a first surface and a second surface that are disposed opposite to each other in the first direction. The first surface may be an upper surface 2811 shown in FIG. 19, the second surface is a lower surface 2813 shown in FIG. 19, and the lower surface 2813 is disposed on a side that is of the cover 281 and that faces the bottom surface 231. The cover 281 may be a metal cover. It may be understood that a material of the cover 281 is not limited in this application. The upper insulating plastic part 282 fixedly covers a part of the upper surface 2811. The lower insulating plastic part 283 is located between the lower surface 2813 and the top surface 235 of the electrode assembly 23, and the lower insulating plastic part 283 covers a part of the lower surface 2813. The terminal 285 passes through the lower insulating plastic part 283, the cover 281, and the upper insulating plastic part 282, and the terminal 285 is electrically connected to the electrode assembly 23. The upper insulating plastic part 282 and the lower insulating plastic part 283 are configured to electrically insulate the cover 281 and the terminal 285. The terminal 285 includes a positive terminal and a negative terminal. The positive terminal is electrically connected to the positive tab, and the negative terminal is electrically connected to the negative tab. The positive terminal and the negative terminal are configured to be electrically connected to an external apparatus, to implement electric energy transmission between the battery 20 and the external apparatus.

The upper surface 2811 and the lower surface 2813 each include at least one surface pore. A part of the upper insulating plastic part 282 is embedded in the surface pore of the upper surface 2811, and a part of the lower insulating plastic part 283 is embedded in the surface pore of the lower surface 2813. In this way, the upper insulating plastic part 282, the cover 281, and the lower insulating plastic part 283 form an integrated composite structure. This improves sealing performance of the battery cover 28, simplifies a structure of the battery cover 28, and facilitates assembly of the battery cover 28 and another element. In addition, the upper surface 2811 that is of the cover 281 and that is in contact with the upper insulating plastic part 282 is provided with at least one surface pore, and a part of the upper insulating plastic part 282 is embedded in the at least one surface pore disposed on the upper surface 2811. This improves stability of a connection between the upper insulating plastic part 282 and the cover 281. The lower surface 2813 that is of the cover 281 and that is in contact with the lower insulating plastic part 283 is provided with at least one surface pore, and a part of the lower insulating plastic part 283 is embedded in the at least one surface pore of the lower surface 2813. This improves stability of a connection between the lower insulating plastic part 283 and the cover 281.

It may be understood that one of the upper surface 2811 and the lower surface 2813 is provided with a surface pore, and a part of the cover 281 is embedded in the surface pore.

In some implementations of this application, the surface pore is a nanoscale pore, and a diameter range of the nanoscale pore is [10 nm, 500 nm]. The surface pore is a nanoscale pore, can increase a contact area between the cover 281 and the upper insulating plastic part 282 and a contact area between the cover 281 and the lower insulating plastic part 283, and can improve connection strength between the cover 281 and the upper insulating plastic part 282 and connection strength between the cover 281 and the lower insulating plastic part 283. A width range of the surface pore is [0.05 mm, 1 mm]. In the first direction, a depth of the surface pore of is [0.1 mm, 3 mm], and a thickness range of the cover 281 is [0.1 mm, 9 mm].

The cover 281 is provided with a first terminal through hole 2817 that passes through the upper surface 2811 and the lower surface 2813, and the first terminal through hole 2817 is configured to allow the terminal 285 to pass through. The surface pore is spaced from a peripheral edge of the first terminal through hole 2817, that is, there is a spacing between the surface pore and an outer peripheral edge of the first terminal through hole 2817, to reduce a possibility that a hole wall of the first terminal through hole 2817 cracks and the cover 281 cracks. There is a spacing between the surface pore and an outer peripheral edge of the cover 281, to reduce a possibility that the outer peripheral edge of the cover 281 cracks and the cover 281 cracks. The cover 281 is further provided with a liquid injection hole and a mounting hole. The liquid injection hole is configured to inject an electrolyte. The mounting hole is configured to install an explosion-proof valve.

In some implementations of this application, the upper insulating plastic part 282 is injected into the surface pore of the upper surface 2811 of the cover 281 through integral injection molding, and the upper insulating plastic part 282 generates anchoring effect and is tightly fastened to the cover 281. The lower insulating plastic part 283 is injected into the surface pore of the lower surface 2813 of the cover 281 through integrated injection molding, and the lower insulating plastic part 283 generates anchoring effect and is tightly fastened to the cover 281. The upper insulating plastic part 282, the cover 281, and the lower insulating plastic part 283 form a unique integrated sealing structure design, which improves sealing performance of the battery cover 28 and reduces use of the sealing structure.

Materials of the upper insulating plastic part 282 and the lower insulating plastic part 283 are selected from polyethylene, polypropylene, polyoxymethylene, polystyrene, modified polyethylene terephthalate, polybutylene terephthalate, polyethylene naphthalate, polyphenylene sulfide, polyimide, polyamide-imide, polyetherimide, polysulfone, polyethersulfone, polyether ketone, polyether magnesium, polycarbonate, polyamide, or acrylonitrile-butadiene-styrene copolymer. The material of the cover is selected from at least one of aluminum, titanium, an aluminum alloy, a titanium alloy, or stainless steel.

Materials of the upper insulating plastic part 282 and the lower insulating plastic part 283 include a filler, and the filler includes at least one of glass fiber, carbon fiber, carbon nanotube, carbon black, cement, and ceramic.

In some implementations of this application, the upper insulating plastic part 282 is provided with a second terminal through hole 2821, and the second terminal through hole 2821 is configured to allow the terminal 285 to pass through. The lower insulating plastic part 283 is provided with a third terminal through hole 2831, and the third terminal through hole 2831 is configured to allow the terminal 285 to pass through. The terminal 285 passes through the second terminal through hole 2821 and the third terminal through hole 2831.

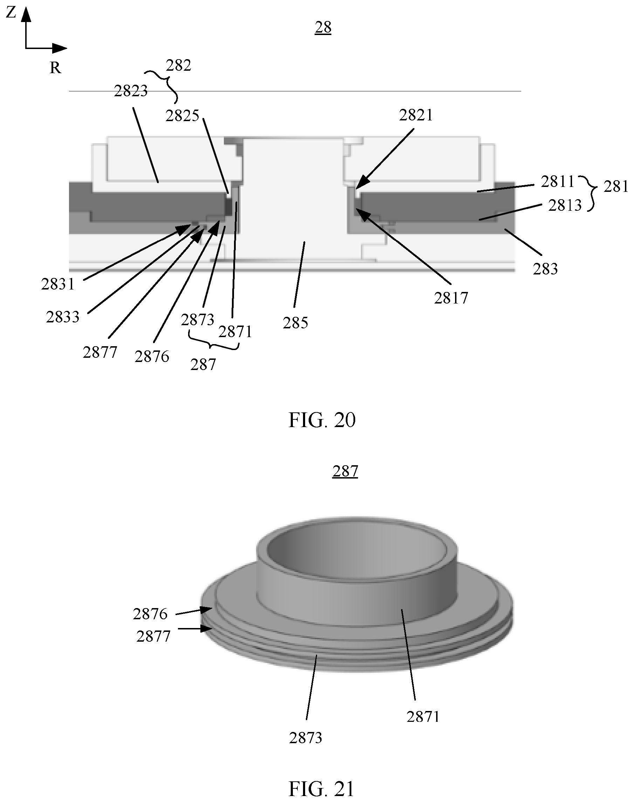

In a possible implementation, FIG. 20 is a partial sectional view obtained along a line I2-I2 in FIG. 18 according to an embodiment of this application. The upper insulating plastic part 282 further includes a body 2823 and an extension part 2825 protruding from a side that is of the body 2823 and that faces the cover 281. The second terminal through hole 2821 penetrates the body 2823 and the extension part 2825, the body 2823 covers a part of the upper surface 2811, and an outer wall of the extension part 2825 is attached to an inner wall of the first terminal through hole 2817. The extension part 2825 extends into the first terminal through hole 2817, and the extension part 2825 is located between the inner wall of the first terminal through hole 2817 and an outer wall of the terminal 285, to reduce a possibility of generating a gap between the upper insulating plastic part 282 and the cover 281.

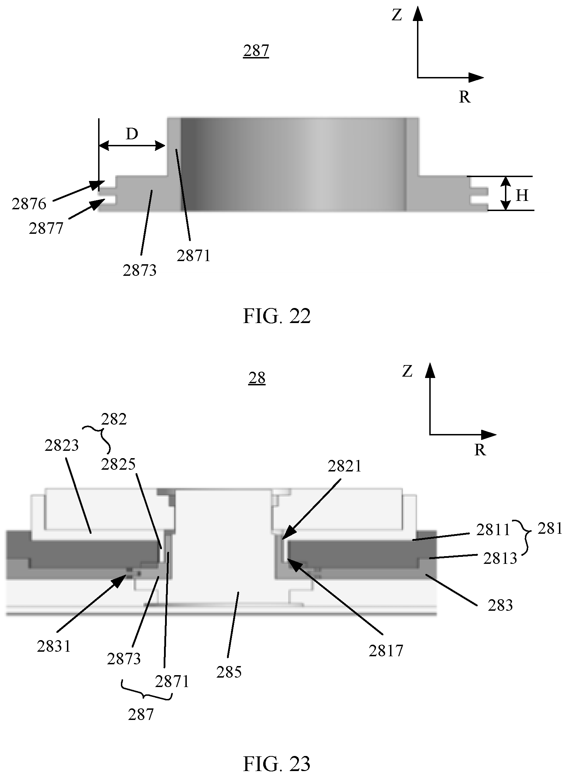

Refer to FIG. 20, FIG. 21, and FIG. 22. FIG. 21 is a three-dimensional view of a sealing element of the battery cover shown in FIG. 20. FIG. 22 is a sectional view along a radial direction of the sealing element shown in FIG. 20. The battery cover 28 further includes the sealing element 287, and the sealing element 287 passes through the third terminal through hole 2831 and the first terminal through hole 2817. The sealing element 287 is of a hollow structure, and the terminal 285 passes through the hollow structure of the sealing element 287. The sealing element 287 is configured to implement a sealed connection between the terminal 285, the lower insulating plastic part 283, and the cover 281, to limit water vapor, impurities, and the like from entering the battery 20.

A material of the sealing element 287 is selected from polyethylene, polypropylene, polyoxymethylene, polystyrene, modified polyethylene terephthalate, polybutylene terephthalate, polyethylene naphthalate, polyphenylene sulfide, polyimide, polyamide-imide, polyetherimide, polysulfone, polyethersulfone, polyether ketone, polyether magnesium, polycarbonate, polyamide, acrylonitrile-butadiene-styrene copolymer, ceramic, or cement.

The material of the sealing element 287 includes a filler, and the filler includes glass fiber, carbon fiber, carbon nanotube, carbon black, cement, and ceramic.

In some possible implementations, the upper insulating plastic part 282, the sealing element 287, and the lower insulating plastic part 283 may be made of an organic insulating material or an inorganic insulating material, for example, a doped-optimized ceramic material, a doped-optimized PPS organic material, glass, or cement.

As shown in FIG. 20, in some implementations of this application, a cross section of the sealing element 287 in a radial direction of the sealing element 287 is approximately of a "T"-shaped step structure, and the sealing element 287 includes a first sealing part 2871 and a second sealing part 2873 that are connected in an axial direction of the sealing element 287. An aperture of the first terminal through hole 2817 is less than an aperture of the third terminal through hole 2831. An aperture of the second terminal through hole 2821 is less than the aperture of the first terminal through hole 2817. An outer diameter of the first sealing part 2871 is less than an outer diameter of the second sealing part 2873. The first sealing part 2871 sequentially passes through the first terminal through hole 2817 and the second terminal through hole 2821. The extension part 2825 is located between an outer wall of the first sealing part 2871 and the inner wall of the first terminal through hole 2817, and the outer wall of the first sealing part 2871 is attached to an inner wall of the second terminal through hole 2821. The second sealing part 2873 is accommodated in the third terminal through hole 2831. The second sealing part 2873 is located between an inner wall of the third terminal through hole 2831 and the outer wall of the terminal 285. The upper insulating plastic part 282 and the lower insulating plastic part 283 form a step structure with the sealing element 287 through integrated injection molding. This avoids an electron conduction risk caused by crystallization of the electrolyte due to a gap between the upper insulating plastic part 282, the lower insulating plastic part 283, and the sealing element 287.

It may be understood that the aperture of the first terminal through hole 2817 may be not less than the aperture of the third terminal through hole 2831, and the aperture of the second terminal through hole 2821 may be not less than the aperture of the first terminal through hole 2817. For example, the aperture of the first terminal through hole 2817, the aperture of the second terminal through hole 2821, and the aperture of the third terminal through hole 2831 may be the same, or the aperture of the first terminal through hole 2817 may be greater than the aperture of the third terminal through hole 2831, and the aperture of the second terminal through hole 2821 may be greater than the aperture of the first terminal through hole 2817.

It may be understood that a structure of the sealing element 287 is not limited in this application.

Refer to FIG. 20, FIG. 21, and FIG. 22. The sealing element 287 further includes a first recessed part 2876 recessed on a surface that is of the second sealing part 2873 and that faces the cover 281, and the first recessed part 2876 is configured to be fastened to the cover 281. A part of the cover 281 is fixedly embedded in the first recessed part 2876. The first recessed part 2876 is disposed along an outer peripheral edge of the second sealing part 2873, so that the second sealing part 2873 is of a step structure.

A part of the cover 281 is fastened in the first recessed part 2876. In this way, a connection area between the cover 281 and the second sealing part 2873 is increased, a possibility of generating a gap between the cover 281 and the second sealing part 2873 is reduced, and sealing performance and connection strength between the cover 281 and the second sealing part 2873 are improved.

The sealing element 287 further includes a second recessed part 2877, and the second recessed part 2877 is configured to be fastened to the lower insulating plastic part 283. The second recessed part 2877 is recessed on a peripheral wall that is of the second sealing part 2873 and that faces the inner wall of the third terminal through hole 2831, the inner wall of the third terminal through hole 2831 of the lower insulating plastic part 283 faces the second sealing part 2873 to form a flange 2833 (as shown in FIG. 20), and the flange 2833 is fixedly accommodated in the second recessed part 2877. Because the flange 2833 is fixedly accommodated in the second recessed part 2877, a connection area between the lower insulating plastic part 283 and the second sealing part 2873 is increased, a possibility of generating a gap between the lower insulating plastic part 283 and the second sealing part 2873 is reduced, and sealing performance and connection strength between the lower insulating plastic part 283 and the second sealing part 2873 are improved.

It may be understood that the first recessed part 2876 and the second recessed part 2877 may be an annular groove or an annular recess extending in a circumferential direction of the second sealing part 2873, or the first recessed part 2876 and the second recessed part 2877 may not extend in the circumferential direction of the second sealing part 2873. The first recessed part 2876 and the second recessed part 2877 may be omitted. There may be two or more first recessed parts 2876, to increase the connection area between the second sealing part 2873 and the lower insulating plastic part 283 of the cover 281, thereby improving connection stability and sealing performance between the sealing element 287 and the lower insulating plastic part 283. There may be two or more second recessed parts 2877, to increase the connection area between the second sealing part 2873 and the lower insulating plastic part 283 of the cover 281, thereby improving connection stability and sealing performance between the sealing element 287 and the lower insulating plastic part 283.

As shown in FIG. 22, in some implementations of this application, a length D of the second sealing part 2873 extending in a radial direction R of the second sealing part 2873 is [50 µm, 600 µm], so that there is a large contact area between the second sealing part 2873 and the cover 281. A height H of the second sealing part 2873 in a first direction Z is [50 µm, 2000 µm], so that the second sealing part 2873 has high strength. It may be understood that the length of the second sealing part 2873 extending in the radial direction R of the second sealing part 2873 is not limited in this application, and the height H of the second sealing part 2873 in the first direction Z is not limited in this application.

In a possible implementation, FIG. 23 is a partial sectional view obtained along a line I2-I2 in FIG. 18 according to an embodiment of this application. The extension part 2825 passes through the first terminal through hole 2817. The first sealing part 2871 passes through the second terminal through hole 2821 and is attached to the inner wall of the second terminal through hole 2821. The extension part 2825 is located between the inner wall of the first terminal through hole 2817 and the outer wall of the first sealing part 2871. An end face that is of the extension part 2825 and that is away from the body 2823 is attached to the second sealing part 2873.

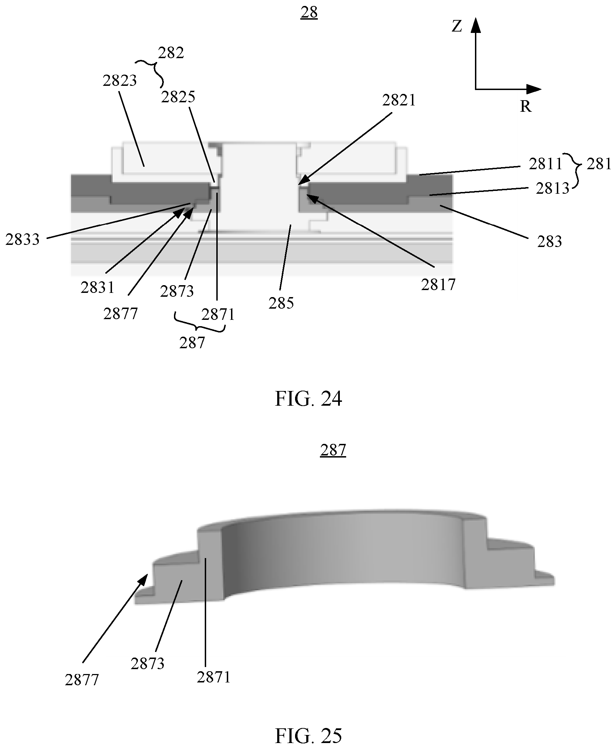

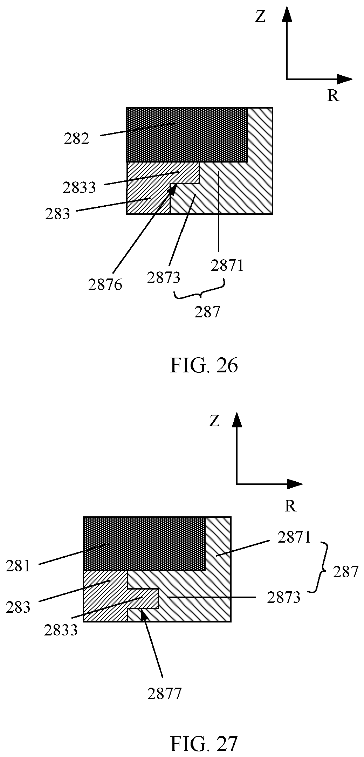

In a possible implementation, as shown in FIG. 24, FIG. 25, and FIG. 26, FIG. 24 is a partial sectional view obtained along a line I2-I2 in FIG. 18 according to an embodiment of this application, FIG. 25 is a three-dimensional view of the sealing element of the battery cover shown in FIG. 24, and FIG. 26 is a partial sectional view of the cover, the lower insulating plastic part, and the sealing element that are assembled together according to an embodiment of this application. The second sealing part 2873 is of a step structure, the second recessed part 2877 is recessed on a surface that is of the second sealing part 2873 and that faces the cover 281 in the first direction, and the second recessed part 2877 is disposed along an outer peripheral edge that is of the second sealing part 2873 and that is away from the hollow structure of the sealing element 287. The flange 2833 is fixedly accommodated in the second recessed part 2877. The surface that is of the second sealing part 2873 and that faces the cover 281 is attached to a part of the lower surface 2813, and the outer wall of the first sealing part 2871 is attached to an outer wall of the first terminal through hole 2817. The end face that is of the extension part 2825 and that is away from the body 2823 is attached to an end face that is of the first sealing part 2871 and that is away from the second sealing part 2873.

In a possible implementation, FIG. 27 is a partial sectional view of the cover, the lower insulating plastic part, and the sealing element that are assembled together according to an embodiment of this application. A first recessed part is omitted in the sealing element 287, the second recessed part 2877 is located on a peripheral wall that is of the second sealing part 2873 and that is away from the hollow structure, and the flange 2833 is fastened in the second recessed part 2877.

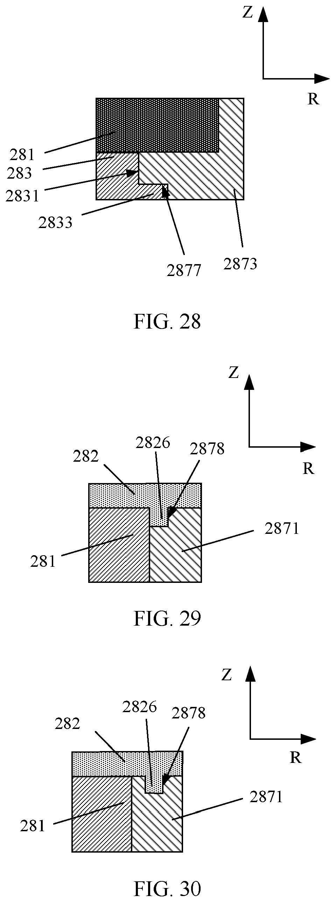

In a possible implementation, FIG. 28 is a partial sectional view of the cover, the lower insulating plastic part, and the sealing element that are assembled together according to an embodiment of this application. A first recessed part is omitted in the sealing element 287, the second recessed part 2877 is located at an end that is of the second sealing part 2873 and that is away from the cover 281 in the first direction, and the flange 2833 is disposed at an end that is of the third terminal through hole 2831 and that is away from the cover 281 in the first direction. The flange 2833 is fastened and clamped to the second recessed part 2877.

In a possible implementation, FIG. 29 is a partial sectional view of the cover, the upper insulating plastic part, and the sealing element that are assembled together according to an embodiment of this application. The sealing element 287 further includes a third recessed part 2878, the third recessed part 2878 is recessed on a surface that is of the first sealing part 2871 and that is away from the second sealing part 2873 in the first direction, and the third recessed part 2878 penetrates an outer peripheral wall that is of the first sealing part 2871 and that is away from the hollow structure. An embedded part 2826 protrudes from a surface that is of the upper insulating plastic part 282 and that faces the cover 281, and at least a part of the embedded part 2826 is fixedly accommodated in the third recessed part 2878. This increases a connection area between the upper insulating plastic part 282 and the first sealing part 2871, reduces a possibility of generating a gap between the upper insulating plastic part 282 and the first sealing part 2871, and improves sealing performance and connection strength between the upper insulating plastic part 282 and the first sealing part 2871.

In a possible implementation, FIG. 30 is a partial sectional view of the cover, the upper insulating plastic part, and the sealing element that are assembled together according to an embodiment of this application. The third recessed part 2878 is a groove.

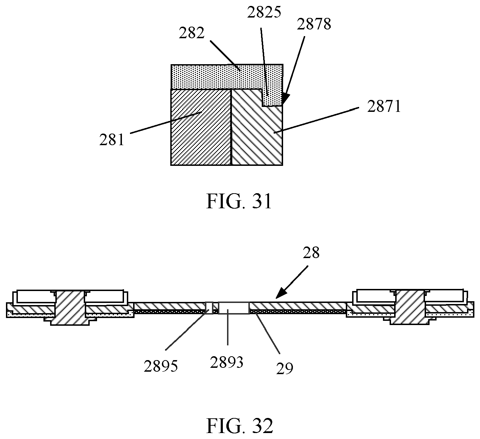

In a possible implementation, FIG. 31 is a partial sectional view of the cover, the upper insulating plastic part, and the sealing element that are assembled together according to an embodiment of this application. The third recessed part 2878 penetrates an inner peripheral wall that is of the first sealing part 2871 and that faces the hollow structure of the sealing element 287.

It may be understood that the second terminal through hole 2821 may not penetrate the extension part 2825, provided that the extension part 2825 is connected to the first sealing part 2871.

It may be understood that the extension part 2825 of the upper insulating plastic part 282 may be omitted.

FIG. 32 is a diagram in which an insulation protective film is disposed on the battery cover according to an embodiment of this application. An insulation protective film 29 is further disposed on a side that is of the battery cover 28 and that faces the electrode assembly. The insulation protective film 29 is configured to insulate and isolate the electrolyte from the battery cover 28, to prevent poor corrosion caused by contact between the electrolyte and the battery cover 28, and help improve safety performance of the battery. In some implementations of this application, the insulation protective film 29 is disposed to avoid an explosion-proof valve mounting hole 2893 and the liquid injection hole 2895.

The insulation protective film 29 may be an organic material or an inorganic material. The organic material is not limited to a material like polytetrafluoroethylene, polyvinylidene fluoride, polyethylene, polypropylene, polyimide, or polyethylene terephthalate. The inorganic material is not limited to a material like ceramic, magnesium oxide, aluminum oxide, water glass, phosphate, or talc.

A preparation process of the insulation protective film 29 may be one of the following manners: vacuum coating, electroplating, chemical coating, spraying, brushing, scraping, dip coating, or the like.

A thickness of the insulation protective film 29 may be [10 µm, 200 µm]. It may be understood that the insulation protective film 29 may be designed for the integrated battery cover 28. When the battery cover 28 is in a split design, the insulation protective film 29 also covers the side that is of the battery cover 28 and that faces the electrode assembly.

It should be understood that the expressions such as "include" and "may include" that can be used in this application represent existence of disclosed functions, operations, or constituent elements, and are not limited to one or more additional functions, operations, or constituent elements. In this application, the terms such as "include" and/or "have" can be construed as representing a particular feature, quantity, operation, constituent element, component, or a combination thereof, but cannot be construed as excluding existence or addition possibility of one or more other features, quantities, operations, constituent elements, components, or combinations thereof.

In addition, in this application, the expression "and/or" includes any and all combinations of words listed in association. For example, the expression "A and/or B" may include A, may include B, or may include both A and B.

In this application, expressions including ordinal numbers such as "first" and "second" may modify elements. However, such elements are not limited by the expressions. For example, the expressions do not limit the order and/or importance of the elements. The expression is used only to distinguish one element from another. For example, first user equipment and second user equipment indicate different user equipment, although both the first user equipment and the second user equipment are user equipment. Similarly, without departing from the scope of this application, a first element may be referred to as a second element, and similarly, a second element may also be referred to as a first element.

When a component is referred to as "being connected to" or "accessing" another component, it should be understood that the component may be directly connected to or access the another component, or there may be another component between the component and the another component. In addition, when a component is referred to as "being directly connected to" or "directly accessing" another component, it should be understood that there is no component between the component and the another component.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery, wherein the battery comprises a housing, an electrode assembly, a Mylar film, an insulating porous film, and a bottom tray, and the electrode assembly, the Mylar film, the insulating porous film, and the bottom tray are all accommodated in the housing; and
a bottom surface of the electrode assembly, the Mylar film, the insulating porous film, and the bottom tray are sequentially stacked, and the insulating porous film comprises a plurality of through holes.

2. The battery according to claim 1, wherein the Mylar film located on the bottom surface comprises a plurality of first holes, the bottom tray comprises a plurality of second holes, an aperture of the through hole is less than an aperture of the first hole, and the aperture of the through hole is less than an aperture of the second hole.

3. The battery according to claim 2, wherein the plurality of first holes and the plurality of second holes are disposed in a non-overlapping manner.

4. The battery according to claim 1, wherein an aperture range of the through hole is [0.01 µm ,50 µm].

5. The battery according to claim 1, wherein the electrode assembly further comprises a side surface, and the insulating porous film covers a joint between the side surface and the bottom surface.

6. The battery according to claim 5, wherein the electrode assembly further comprises a top surface and a tab, the top surface is disposed opposite to the bottom surface, the side surface is connected between the bottom surface and the top surface, and the tab is disposed on the top surface and protrudes from the top surface;
the Mylar film covers the side surface and the top surface;
the insulating porous film covers a surface that is of the Mylar film and that is away from the side surface and the top surface; and
the insulating porous film on the top surface is provided with an avoidance hole, and the tab passes through the avoidance hole.

7. The battery according to claim 1, wherein the electrode assembly further comprises two side surfaces that are adjacently connected, the two side surfaces and the bottom surface jointly form a bottom corner structure, and the Mylar film wraps the bottom corner structure; and
the battery further comprises a protective adhesive tape, the protective adhesive tape wraps the bottom corner structure and is located on a side that is of the Mylar film and that is away from the electrode assembly, and a part of the protective adhesive tape is located between the bottom tray and the insulating porous film.

8. The battery according to claim 1, wherein the battery further comprises a battery cover, the battery cover covers the housing, the electrode assembly comprises a top surface, the top surface is disposed opposite to the bottom surface, and an insulation protective film is disposed on a side that is of the battery cover and that faces the top surface of the electrode assembly.

9. The battery according to claim 1, wherein the battery further comprises a battery cover, the battery cover covers the housing, and the battery cover, the electrode assembly, the insulating porous film, and the bottom tray are sequentially disposed;
the battery cover comprises a cover, an upper insulating plastic part, a lower insulating plastic part, and a terminal;
the cover comprises a first surface and a second surface that are disposed opposite to each other, the second surface is disposed on a side that is of the cover and that faces the bottom surface, and the cover is provided with a first terminal through hole that passes through the first surface and the second surface;
at least a part of the upper insulating plastic part covers the first surface, and the upper insulating plastic part is provided with a second terminal through hole;
the lower insulating plastic part is located between the second surface and the electrode assembly, at least a part of the lower insulating plastic part covers the second surface, and the lower insulating plastic part is provided with a third terminal through hole; and
the terminal passes through the third terminal through hole, the first terminal through hole, and the second terminal through hole, and the terminal is electrically connected to the electrode assembly.

10. The battery according to claim 9, wherein the first surface comprises at least one surface pore, and a part of the upper insulating plastic part is embedded in the surface pore of the first surface; and/or the second surface comprises at least one surface pore, and a part of the lower insulating plastic part is embedded in the surface pore of the second surface.

11. The battery according to claim 10, wherein there is a spacing between the surface pore and an outer peripheral edge of the first terminal through hole, and there is a spacing between the surface pore and an outer peripheral edge of the cover.

12. The battery according to claim 10, wherein a diameter range of the surface pore is [10 nm, 500 nm].

13. The battery according to claim 9, wherein the battery cover further comprises a sealing element, and the sealing element is located between an inner wall of the first terminal through hole and an outer wall of the terminal.

14. The battery according to claim 13, wherein an aperture of the third terminal through hole is greater than an aperture of the second terminal through hole; and
the sealing element comprises a first sealing part and a second sealing part that are connected, an outer diameter of the first sealing part is less than an outer diameter of the second sealing part, at least a part of the first sealing part is located between the inner wall of the first terminal through hole and the outer wall of the terminal, and the second sealing part is located between an inner wall of the third terminal through hole and the outer wall of the terminal.

15. The battery according to claim 14, wherein the upper insulating plastic part further comprises a body and an extension part protruding from a side that is of the body and that faces the cover, the second terminal through hole penetrates the body, the body covers at least a part of the first surface, and the extension part is located between the inner wall of the first terminal through hole and the outer wall of the terminal.

16. The battery according to claim 15, wherein a part of the first sealing part is located between the inner wall of the first terminal through hole and the outer wall of the terminal, and a remaining part of the first sealing part passes through the second terminal through hole; and the extension part is located between an inner wall of the second terminal through hole and an outer wall of the first sealing part; or an end face that is of the extension part and that is away from the body is attached to an end that is of the first sealing part and that is away from the second sealing part.

17. The battery according to claim 14, wherein the sealing element further comprises a first recessed part, the first recessed part is recessed on a surface that is of the second sealing part and that faces the cover, and a part of the cover is fastened in the first recessed part.

18. The battery according to claim 14, wherein the sealing element further comprises a second recessed part, the second recessed part is recessed on an outer peripheral wall that is of the second sealing part and that is away from a hollow structure of the sealing element, the inner wall of the third terminal through hole of the lower insulating plastic part faces the sealing element to form a flange, and the flange is embedded in the second recessed part.

19. The battery according to claim 14, wherein the sealing element further comprises a third recessed part, the third recessed part is recessed on an end face that is of the first sealing part and that is away from the second sealing part, an embedded part is disposed on a surface that is of the upper insulating plastic part and that faces the cover, and the embedded part is fixedly accommodated in the recessed part.

20. The battery according to claim 1, wherein an insulation coating is disposed on an inner wall that is of the housing and that faces the electrode assembly.

21. The battery according to claim 20, wherein the inner wall comprises a bottom wall, and the bottom tray is located between the insulating porous film and the bottom wall.

22. The battery according to claim 20, wherein the inner wall comprises a bottom wall and four side walls connected to the bottom wall, the bottom tray is located between the insulating porous film and the bottom wall, and the insulation coating is coated on two opposite side walls.

23. A battery pack, wherein the battery pack comprises a plurality of batteries according to any one of claims 1 to 22, and the plurality of batteries are connected in series or in parallel.

24. An energy storage system, wherein the energy storage system comprises the battery pack according to claim 23 and a power converter, and the power converter is configured to: convert an alternating current output by an external alternating current power supply into a direct current, and output the direct current to the battery pack, and/or the power converter is configured to: convert a direct current output by the battery pack into an alternating current, and output the alternating current to a load or a power grid.

25. A battery, wherein the battery comprises a housing, an electrode assembly, a Mylar film, and a bottom tray, and the electrode assembly, the Mylar film, and the bottom tray are all accommodated in the housing; and
a bottom surface of the electrode assembly, the Mylar film, and the bottom tray are sequentially stacked, the insulating porous film comprises a plurality of through holes, and an aperture of the through hole is [1 nm ,100 nm].

26. The battery according to claim 25, wherein the bottom tray comprises a plurality of holes, and the plurality of holes and the plurality of through holes are disposed in a non-overlapping manner.
